# EUROPEAN PATENT APPLICATION

(11) **EP 4 422 271 A1**
(43) Date of publication of application: **28.08.2024**
(21) Application number: 22882965.1
(22) Date of filing: 21.10.2022
(51) Int. Cl.: H04W 36/00, H04W 36/04

(54) **HANDOVER METHOD AND APPARATUS, AND DEVICE AND READABLE STORAGE MEDIUM**

(30) Priority: 21.10.2021 CN 202111228027
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100053 (CN); XIE, Fang, Beijing 100053 (CN)
(74) Representative: Maiwald GmbH
(86) International application number: PCT/CN2022/126601
(87) International publication number: WO 2023/066360

(57) **Abstract**

Provided in the embodiments of the present application are a handover method and apparatus, and a device and a readable storage medium. The method comprises: a terminal performing handover, wherein the handover time of the terminal comprises at least one of the following: the sum of a primary cell (PCell) handover time and a primary secondary cell (PSCell) addition time; the largest one of the PCell handover time and the PSCell addition time; the PCell handover time and/or the PSCell addition time; the sum of a PCell search time and a PSCell search time; and the sum of the PCell search time, a PCell synchronization time, the PSCell search time and a PSCell synchronization time.

## Description

### CROSS-REFERENCE TO RELATED APPLICATION

This application claims priority to and is based on Chinese patent application No. 202111228027.2, filed on October 21, 2021, the entire content of which is incorporated herein by reference.

### TECHNICAL FIELD

Embodiments of the disclosure relate to the field of communication technologies, and particularly, to a handover method, a handover apparatus, a device, and a readable storage medium.

### BACKGROUND

When transitioning from new radio (NR) stand alone (SA) to multi-radio access technology dual connectivity (MR-DC) (which encompasses dual connectivity such as between fifth generation (5G) NR and 4G long-term evolution (LTE) (NE-DC), as well as between 4G LTE and 5G NR (EN-DC), and between two instances of 5G NR (NR-DC)), or when performing a transition between MR-DC scenarios that involve a change in a primary cell (PCell) (which encompasses transitions like NE-DC to NE-DC, EN-DC to EN-DC, or NR-DC to NR-DC), typically, a PCell handover is performed first following a handover command, followed by a primary secondary cell (PSCell) addition based on a PSCell addition command. This approach might result in a relatively lengthy duration to complete a conversion of relevant modes.

In the related art, a PCell handover and a PSCell addition are conventionally handled independently. Nevertheless, when conducting a handover that includes a PSCell addition, a radio resource control (RRC) message implies both the PCell handover and the PSCell addition at the terminal. The lack of clear specifications governing the concurrent execution of the PCell handover and the PSCell addition within this process may lead to unpredictable terminal behaviors during such handovers involving PSCell additions.

### SUMMARY

This disclosure presents embodiments targeting the provision of a handover method, a handover apparatus, a device, and a readable storage medium, each addressing the problem concerning how a terminal carries out a handover effectively.

According to a first aspect, a handover method is provided and includes performing a handover by a terminal. A handover time of the terminal includes one or more of: a sum of a PCell handover time of the terminal and a PSCell addition time of the terminal; a maximum value of a PCell handover time of the terminal and a PSCell addition time of the terminal; a PCell handover time of the terminal and/or a PSCell addition time of the terminal; a sum of a PCell search time of the terminal and a PSCell search time of the terminal; or a sum of a PCell search time of the terminal, a PCell synchronization time of the terminal, a PSCell search time of the terminal, and a PSCell synchronization time of the terminal.

Optionally, in a case that a first condition is satisfied, the handover time of the terminal includes one or more of: the sum of the PCell handover time and the PSCell addition time; the sum of the PCell search time and the PSCell search time; or the sum of the PCell search time, the PCell synchronization time, the PSCell search time, and the PSCell synchronization time.

The first condition includes that: the terminal is configured with a synchronization signal block based (SSB-based) measurement timing configuration (SMTC) of a target unknown PSCell.

Optionally, the method also includes obtaining first information by the terminal.

The first information includes one or more of: first indication information for indicating the terminal to perform a PSCell addition after transmitting a physical random access channel (PRACH) preamble to a PCell; second indication information for indicating the terminal to perform a PSCell addition after receiving a random access response (RAR) transmitted by a PCell; third indication information for indicating the terminal to perform a PSCell addition after receiving message 4 (MSG4) transmitted by a PCell; fourth indication information for indicating the terminal to perform a PSCell addition after transmitting message A (MSGA) to a PCell; or fifth indication information for indicating the terminal to perform a PSCell addition after receiving message B (MSGB) transmitted by a PCell.

Optionally, the method also includes obtaining second information by the terminal.

The second information includes one or more of: sixth indication information for indicating that the handover time of the terminal includes the sum of the PCell handover time of the terminal and the PSCell addition time of the terminal; seventh indication information for indicating that the handover time of the terminal includes the maximum value of the PCell handover time of the terminal and the PSCell addition time of the terminal; eighth indication information for indicating that the handover time of the terminal includes the PCell handover time of the terminal and/or the PSCell addition time of the terminal; ninth indication information for indicating that the handover time of the terminal includes the sum of the PCell search time of the terminal and the PSCell search time of the terminal; or tenth indication information for indicating that the handover time of the terminal includes the sum of the PCell search time of the terminal, the PCell synchronization time of the terminal, the PSCell search time of the terminal, and the PSCell synchronization time of the terminal.

Optionally, a length of the handover time of the terminal is a first time length.

In a case that the first information includes the first indication information, the first time length is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length is: a sum of a time length starting from a moment the terminal receives an RRC message implying the handover to a moment the terminal transmits the MSGA to the PCell, and a time length for the terminal to perform the PSCell addition.

Or, in a case that the first information includes the fifth indication information, the first time length is: a sum of a time length starting from a moment the terminal receives an RRC message implying the handover to a moment the terminal receives the MSGB transmitted by the PCell, and a time length for the terminal to perform the PSCell addition.

Optionally, the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

Optionally, the method also includes: obtaining a first threshold by the terminal, in which the first threshold is related to a channel quality; and
in response to the channel quality being higher than and/or equal to a first value of the first threshold, determining to perform a PSCell addition after transmitting message 1 (MSG1) to a PCell;
   or,
in response to the channel quality being higher than and/or equal to a second value of the first threshold, determining to perform a PSCell addition after receiving message 2 (MSG2) transmitted by a PCell;
   or,
in response to the channel quality being higher than and/or equal to a third value of the first threshold, determining to perform a PSCell addition after receiving message 4 (MSG4) transmitted by a PCell;
   or,
in response to the channel quality being lower than and/or equal to a first value of the first threshold, and the channel quality being higher than and/or equal to a second value of the first threshold, determining to perform a PSCell addition after receiving MSG2 transmitted by a PCell;
   or,
in response to the channel quality being lower than and/or equal to a second value of the first threshold, and the channel quality being higher than and/or equal to a third value of the first threshold, determining to perform a PSCell addition after receiving MSG4 transmitted by a PCell;
   or,
in response to the channel quality being higher than and/or equal to a fourth value of the first threshold, determining to perform a PSCell addition after transmitting message A (MSGA) to a PCell;
   or,
in response to the channel quality being higher than and/or equal to a fifth value of the first threshold, determining to perform a PSCell addition after receiving message B (MSGB) transmitted by a PCell;
   or,
in response to the channel quality being lower than and/or equal to a fourth value of the first threshold, and the channel quality being higher than and/or equal to a fifth value of the first threshold, determining to perform a PSCell addition after receiving MSGB transmitted by a PCell.

Optionally, the method also includes: obtaining a second threshold by the terminal, in which the second threshold is related to a channel quality.

In response to the channel quality being higher than and/or equal to a first value of the second threshold, the handover time of the terminal includes the sum of the PCell handover time and the PSCell addition time.

In response to the channel quality being higher than and/or equal to a second value of the second threshold, the handover time of the terminal includes the maximum value of the PCell handover time and the PSCell addition time.

In response to the channel quality being higher than and/or equal to a third value of the second threshold, the handover time of the terminal includes the PCell handover time and/or the PSCell addition time.

In response to the channel quality being higher than and/or equal to a fourth value of the second threshold, the handover time of the terminal includes the sum of the PCell search time and the PSCell search time.

In response to the channel quality being higher than and/or equal to a fifth value of the second threshold, the handover time of the terminal includes the sum of the PCell search time, the PCell synchronization time, the PSCell search time, and the PSCell synchronization time.

Optionally, the method also includes: transmitting third information by the terminal to a network side device.

The third information includes one or more of: whether the terminal supports performing a PCell handover and a PSCell addition based on a parallel processing; whether the terminal supports performing a PCell handover and a PSCell addition based on a serial processing; whether the terminal supports that the handover time includes the sum of the PCell handover time and the PSCell addition time; whether the terminal supports that the handover time includes the maximum value of the PCell handover time and the PSCell addition time; whether the terminal supports that the handover time includes the PCell handover time and/or the PSCell addition time; whether the terminal supports that the handover time includes the sum of the PCell search time and the PSCell search time; whether the terminal supports that the handover time includes the sum of the PCell search time, the PCell synchronization time, the PSCell search time, and the PSCell synchronization time; eleventh indication information for indicating to perform a PSCell addition after a second operation; twelfth indication information for indicating that the terminal supports a parallel processing of a third operation; or thirteenth indication information for indicating that the terminal supports a serial processing of a fourth operation.

Optionally, the second operation includes one of: transmitting message 1 (MSG1) to a PCell; receiving message 2 (MSG2) transmitted by a PCell; transmitting message 3 (MSG3) to a PCell; receiving message 4 (MSG4) transmitted by a PCell; transmitting message A (MSGA) to a PSCell; or receiving message B (MSGB) transmitted by a PCell.

Optionally, the method also includes: receiving fourth information by the terminal from a network side device.

The fourth information includes one or more of: fourteenth indication information for indicating whether the terminal performs a handover with a PSCell addition through a parallel processing; fifteenth indication information for indicating whether the terminal performs a handover with a PSCell addition through a serial processing; sixteenth instruction information for indicating that a fifth operation is to be processed in parallel; or seventeenth instruction information for indicating that a sixth operation is to be processed in serial.

Optionally, the third operation or the fourth operation or the fifth operation or the sixth operation includes one or more of: a cell detection; a time domain synchronization; a frequency domain synchronization; an automatic gain control; or a random access.

According to a second aspect, a handover method is provided and includes transmitting first information by a network side device.

The first information includes one or more of: first indication information for indicating a terminal to perform a PSCell addition after transmitting a PRACH preamble to a PCell; second indication information for indicating a terminal to perform a PSCell addition after receiving an RAR transmitted by a PCell; third indication information for indicating a terminal to perform a PSCell addition after receiving MSG4 transmitted by a PCell; fourth indication information for indicating a terminal to perform a PSCell addition after transmitting MSGA to a PCell; or fifth indication information for indicating a terminal to perform a PSCell addition after receiving MSGB transmitted by a PCell.

Optionally, the method also includes: transmitting second information by the network side device.

The second information includes one or more of: sixth indication information for indicating that a handover time of the terminal includes a sum of a PCell handover time of the terminal and a PSCell addition time of the terminal; seventh indication information for indicating that a handover time of the terminal includes a maximum value of a PCell handover time of the terminal and a PSCell addition time of the terminal; eighth indication information for indicating that a handover time of the terminal includes a PCell handover time of the terminal and/or a PSCell addition time of the terminal; ninth indication information for indicating that a handover time of the terminal includes a sum of a PCell search time of the terminal and a PSCell search time of the terminal; or tenth indication information for indicating that a handover time of the terminal includes a sum of a PCell search time of the terminal, a PCell synchronization time of the terminal, a PSCell search time of the terminal, and a PSCell synchronization time of the terminal.

Optionally, a length of the handover time of the terminal is a first time length.

In a case that the first information includes the first indication information, the first time length is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length is: a sum of a time length starting from a moment the terminal receives an RRC message implying the handover to a moment the terminal transmits the MSGA to the PCell and a time length for the terminal to perform the PSCell addition.

Or, in a case that the first information includes the fifth indication information, the first time length is: a sum of a time length starting from a moment the terminal receives an RRC message implying the handover to a moment the terminal receives the MSGB transmitted by the PCell, and a time length for the terminal to perform the PSCell addition.

Optionally, the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

Optionally, the method also includes: transmitting a second threshold by the network side device. The second threshold is related to a channel quality.

In response to the channel quality being higher than and/or equal to a first value of the second threshold, a handover time of the terminal includes a sum of a PCell handover time of the terminal and a PSCell addition time of the terminal.

In response to the channel quality being higher than and/or equal to a second value of the second threshold, a handover time of the terminal includes a maximum value of a PCell handover time of the terminal and a PSCell addition time of the terminal.

In response to the channel quality being higher than and/or equal to a third value of the second threshold, a handover time of the terminal includes a PCell handover time of the terminal and/or a PSCell addition time of the terminal.

In response to the channel quality being higher than and/or equal to a fourth value of the second threshold, a handover time of the terminal includes a sum of a PCell search time of the terminal and a PSCell search time of the terminal.

In response to the channel quality being higher than and/or equal to a fifth value of the second threshold, a handover time of the terminal includes a sum of a PCell search time of the terminal, a PCell synchronization time of the terminal, a PSCell search time of the terminal, and a PSCell synchronization time of the terminal.

Optionally, the method also includes: receiving third information by the network side device.

The third information includes one or more of: whether the terminal supports performing a PCell handover and a PSCell addition based on a parallel processing; whether the terminal supports performing a PCell handover and a PSCell addition based on a serial processing; whether the terminal supports that a handover time includes a sum of a PCell handover time and a PSCell addition time; whether the terminal supports that a handover time includes a maximum value of a PCell handover time and a PSCell addition time; whether the terminal supports that a handover time includes a PCell handover time and/or a PSCell addition time; whether the terminal supports that a handover time includes a sum of a PCell search time and a PSCell search time; whether the terminal supports that a handover time includes a sum of a PCell search time, a PCell synchronization time, a PSCell search time, and a PSCell synchronization time; eleventh indication information for indicating to perform a PSCell addition after a second operation; twelfth indication information for indicating that the terminal supports a parallel processing of a third operation; or thirteenth indication information for indicating that the terminal supports a serial processing of a fourth operation.

Optionally, the second operation includes one of: transmitting MSG1 to a PCell; receiving MSG2 transmitted by a PCell; transmitting MSG3 to a PCell; receiving MSG4 transmitted by a PCell; transmitting MSGA to a PSCell; or receiving MSGB transmitted by a PCell.

Optionally, the method also includes: transmitting fourth information by the network side device.

The fourth information includes one or more of: fourteenth indication information for indicating whether the terminal performs a handover with a PSCell addition through a parallel processing; fifteenth indication information for indicating whether the terminal performs a handover with a PSCell addition through a serial processing; sixteenth instruction information for indicating that a fifth operation is to be processed in parallel; or seventeenth instruction information for indicating that a sixth operation is to be processed in serial.

According to a third aspect, a handover apparatus applied to a terminal is provided and includes a handover module, configured to perform a handover. A handover time of the terminal includes one or more of: a sum of a PCell handover time and a PSCell addition time; a maximum value of a PCell handover time and a PSCell addition time; a PCell handover time and/or a PSCell addition time; a sum of a PCell search time and a PSCell search time; or a sum of a PCell search time, a PCell synchronization time, a PSCell search time, and a PSCell synchronization time.

According to a fourth aspect, a handover apparatus applied to a network side device is provided and includes a second transmitting module, configured to transmit first information.

The first information includes one or more of: first indication information for indicating a terminal to perform a PSCell addition after transmitting a PRACH preamble to a PCell; second indication information for indicating a terminal to perform a PSCell addition after receiving an RAR transmitted by a PCell; third indication information for indicating a terminal to perform a PSCell addition after receiving MSG4 transmitted by a PCell; fourth indication information for indicating a terminal to perform a PSCell addition after transmitting MSGA to a PCell; or fifth indication information for indicating a terminal to perform a PSCell addition after receiving MSGB transmitted by a PCell.

According to a fifth aspect, a communication device is provided and includes: a processor, a memory, and a program stored on the memory and operable on the processor, and when the program is executed by the processor, steps of the method described in the first aspect or the second aspect are realized.

According to a sixth aspect, a readable storage medium is provided, and a program is stored on the readable storage medium, and when the program is executed by a processor, steps of the method described in the first aspect or the second aspect are realized.

According to embodiments of the disclosure, the terminal may determine the time for performing the PSCell addition or determine at which step in the process the PSCell addition should be performed, to assist in the network scheduling, clarify the behavior of the terminal during the handover process involving the PSCell addition, and improve the system performance.

### BRIEF DESCRIPTION OF THE DRAWINGS

Various other advantages and benefits may become evident to those skilled in the art upon reviewing the following detailed descriptions of the embodiments. The drawings are solely intended for illustrative purposes of these embodiments and should not be construed as limiting the scope of the disclosure. Throughout the drawings, consistent reference numerals are employed to denote identical components, in which:
FIG. 1 is a schematic diagram of a wireless communication system applicable to some embodiments of the disclosure;
FIG. 2 is one of flowcharts of a handover method according to some embodiments of the disclosure;
FIG. 3 is another of flowcharts of a handover method according to some embodiments of the disclosure;
FIG. 4 is one of schematic diagrams of a handover apparatus according to some embodiments of the disclosure;
FIG. 5 is another of schematic diagrams of a handover apparatus according to some embodiments of the disclosure;
FIG. 6 is a schematic diagram of a terminal according to some embodiments of the disclosure;
FIG. 7 is a schematic diagram of a network side device according to some embodiments of the disclosure; and
FIG. 8 is a schematic diagram of a communication device according to some embodiments of the disclosure.

### DETAILED DESCRIPTION

The following may clearly and comprehensively describe technical solutions according to embodiments of the disclosure with reference to the drawings according to embodiments of the disclosure. Obviously, these described embodiments represent only a part of the overall scope of the disclosure and do not exhaustively cover all possible embodiments. Based on the disclosed embodiments, any other embodiments derived by those skilled in the art without creative efforts shall fall within the protective scope of this disclosure.

The term "comprise" or "include" and any variation thereof in the descriptions and claims of this disclosure are intended to cover a non-exclusive inclusion, for example, a process, method, system, product, or device including a series of steps or units is not necessarily limited to the explicitly listed steps or units, but may also include additional steps or units that are inherently present or otherwise logically contemplated even if not clearly stated. In addition, the use of "and/or" in the descriptions and claims means at least one of the connected objects, such as A and/or B, means that there are three situations including A alone, B alone, and both A and B.

In accordance with the embodiments disclosed, terms like "exemplary" or "for example" are utilized to denote instances that serve as illustrations or explanatory examples. Any embodiment or design strategy referred to as "exemplary" or "for example" within the context of the disclosed embodiments should not be interpreted as being superior or more favorable compared to alternative embodiments or strategies. Instead, the employment of such terms aims to convey associated concepts in a tangible and understandable manner.

It should be noted that technologies outlined in accordance with embodiments of the disclosure are not limited to the long-term evolution (LTE)/LTE-advanced (LTE-A) systems, and they may also find applications in other wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA), and other systems. In the context of this disclosure, the terms "system" and "network" are often used synonymously, and the described technologies may be applied to the aforementioned systems and radio technologies, as well as potentially to other systems and radio technologies. However, the ensuing descriptions primarily exemplify the use of these technologies in NR systems, and largely employ NR technologies throughout. Nonetheless, these technologies are not restricted to NR system applications alone and may extend to future applications, such as those found in the sixth generation (6G) communication systems.

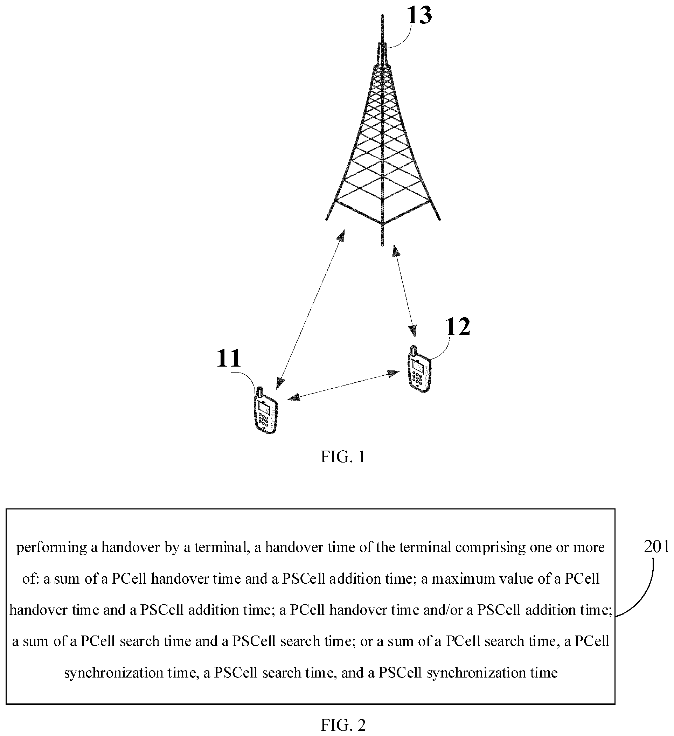

Referring to FIG. 1, it illustrates a block diagram of a wireless communication system in which embodiments of the disclosure may be implemented. The wireless communication system includes a terminal 11, a terminal 12, and a network side device 13. The terminal may also be interchangeably referred to as a terminal equipment or user equipment (UE). Such a terminal may take the form of a mobile phone, a tablet personal computer, a laptop/notebook computer, a personal digital assistant (PDA), a handheld computer, a netbook, an ultra-mobile personal computer (UMPC), a mobile Internet device (MID), an augmented reality (AR)/virtual reality (VR) equipment, a robot, a wearable device, a vehicle-mounted user equipment (VUE), a pedestrian user terminal (PUE), smart home (home equipment with wireless communication capabilities), or similar devices. It should be noted that, according to embodiments of this disclosure, the specific types of terminal 11 and terminal 12 are not restricted.

The network side device 13 can either be a base station or a core network element. The base station may also be referred to by various terms, such as node B, evolved node B (eNodeB), access point, base transceiver station (BTS), radio base station, radio transceiver, basic service set (BSS), extended service set (ESS), B node, gNodeB (evolved Node B), home Node B, home evolved Node B, wireless local area network (WLAN) access point, Wi-Fi^{™} node, transmission reception point (TRP), wireless access network node, or any other suitable industry term that achieves the same technical functionality. It is noted that, while embodiments of this disclosure use the base station in an NR system as an illustrative example, the specific type of base station is not limited to the mentioned technical terms.

In the context of this disclosure, a handover (HO) refers to a handover involving a PSCell. This can also be termed as a handover with PSCell (HO with PSCell), or a handover with a PSCell addition (HO with PSCell addition).

The PCell herein may also be interchangeably referred to as a primary cell or a primary node.

The PSCell herein may also be interchangeably referred to as a primary secondary cell or a secondary node.

The application scenarios encompassed by this disclosure include, but are not limited to, at least one of the following cases:
(1) a transition from NR SA to NE-DC;
(2) a transition from NR SA to EN-DC;
(3) a transition from NR SA to NR-DC;
(4) a transition from NE-DC to NE-DC;
(5) a transition from EN-DC to EN-DC; or
(6) a transition from NR-DC to NR-DC.

The term "handover time" within this disclosure can also be referred to as a handover delay (HO delay) or, alternatively, as an interruption time, encompassing an interruption time resulting from the handover process itself. In detail, the handover time spans an interval starting from the moment the terminal receives an RRC message implying the handover until the moment the terminal starts the transmission of a new physical random access channel (PRACH). Moreover, the transmission of the new PRACH may include transmission of PRACH on target PCell and/or on target PSCell.

Further, the handover time of the terminal may be understood as the period within which the terminal becomes ready to transmit a new PRACH.

Referring to FIG. 2, some embodiments of the disclosure provide a handover method. The entity executing the method may be a terminal, and a specific step within this method includes step 201.

Step 201, the terminal performs a handover. A handover time of the terminal includes one or more of the following.
(1) A sum of a PCell handover time of the terminal and a PSCell addition time of the terminal.

The handover time of the terminal includes: "PCell handover time + PSCell addition time". In this case, the terminal completes the PCell handover and PSCell addition sequentially, covering the following scenarios.

Scenario 1: the PCell handover and the PSCell addition are entirely sequential, meaning that once the PCell handover concludes (in detail, following the transmitting of PRACH to the PCell, i.e., subsequent to receiving message 4 (MSG4) or receiving message B (MSB)), the PSCell addition is then performed.

Scenario 2, there is a partial time-domain overlap between the PRACH procedure of the PCell and the PSCell addition, which includes the following occurrences: transmitting the PRACH preamble (equivalently referred to as message 1 (MSG1)) to the PCell, and then implying the PSCell addition; receiving a random access response (RAR) (equivalently referred to as message 2 (MSG2)) from the PCell, followed by starting the PSCell addition; or transmitting message A (MSGA) to the PCell, after which the PSCell addition begins.

(2) A maximum value of a PCell handover time of the terminal and a PSCell addition time of the terminal.

The handover time of the terminal includes "the maximum value of the PCell handover time and the PSCell addition time". In this case, the terminal completes the PCell handover and PSCell addition in parallel, indicating that these two actions occur independently. The delay of handover with PSCell constitutes the maximum delay among the two actions. Another way to understand this is that the PRACH is transmitted to both the PCell and the PSCell, and the latest time when the PRACH is transmitted to either of them signifies the completion of handover with PSCell.

(3) A PCell handover time of the terminal and/or a PSCell addition time of the terminal.

The handover time of the terminal includes "PCell handover time and/or PSCell addition time". In this case, the terminal performs the PCell handover and PSCell addition in parallel, which means both operations are performed independently, so there's no necessity to define a distinct ending point for handover with PSCell. In this scenario, the handover time of handover with PSCell can include the PCell handover time and the PSCell addition time, which means that each is described separately. Therefore, the total aggregated time for handover with PSCell might not be explicitly represented.

(4) A sum of a PCell search time of the terminal and a PSCell search time of the terminal.

The handover time of the terminal includes "PCell cell selection time + PSCell cell selection time". In this case, the terminal completes the PCell handover and PSCell addition in a partially serial or a partially parallel. In detail, this solution involves conducting the cell search procedures for both the PCell and the PSCell serially, while other procedures-including time synchronizations, frequency synchronizations, and PRACH transmissions-are performed in parallel, that is, they are performed independently.

(5) A sum of a PCell search time, a PCell synchronization time, a PSCell search time, and a PSCell synchronization time.

The handover time of the terminal includes "PCell cell selection time + PCell synchronization time + PSCell cell selection time + PSCell synchronization time". In this case, the terminal completes the PCell handover and PSCell addition in a partially serial or a partially parallel. In detail, this solution indicates that the procedures of PCell cell search, PCell synchronization, PSCell cell search, and PSCell synchronization are carried out sequentially, whereas other procedures, such as s PRACH transmissions, are performed simultaneously and independently.

In addition, the handover time of the terminal in each solution of the solutions (1) to (5) above may also include the RRC processing time.

According to some embodiments of the disclosure, when a first condition is satisfied, the handover time of the terminal includes one or more of: the PCell handover time and the PSCell addition time; the PCell search time and the PSCell search time; or the PCell search time, the PCell synchronization time, the PSCell search time, and the PSCell synchronization time.

The first condition includes that: the terminal is configured with a synchronization signal block based (SSB-based) measurement timing configuration (SMTC) of a target unknown PSCell. That is, the target PSCell is unknown or unidentified and the SMTC of the target PSCell has been configured. The SMTC of the target PSCell is configured, which may be understood as configuring the SMTC for the target PSCell, that is, the terminal has been configured with the SMTC specific to that target PSCell.

Optionally, the terminal is configured with the SMTC for the target unknown PSCell, which includes:
the SMTC of the target unknown PSCell is configured in targetcellSMTC-SCG-r16, but not configured in reconfigurationWithSync; or, the SMTC of the target unknown PSCell is configured in RRCConnectionReconfiguration.

According to some embodiments of the disclosure, the method also includes the following.

The terminal obtains first information. The first information includes one or more of the following.
(1) First indication information for indicating the terminal to perform a PSCell addition after transmitting a physical random access channel (PRACH) (such as the master node PRACH) preamble to the PCell.
(2) Second indication information for indicating the terminal to perform a PSCell addition after receiving a random access response (RAR) transmitted by the PCell.
(3) Third indication information for indicating the terminal to perform a PSCell addition after receiving message 4 (MSG4) transmitted by the PCell.
(4) Fourth indication information for indicating the terminal to perform a PSCell addition after transmitting message A (MSGA) to the PCell.
(5) Fifth indication information for indicating the terminal to perform a PSCell addition after receiving message B (MSGB) transmitted by the PCell.

According to some embodiments of the disclosure, the method also includes the following.

Second information is obtained. The second information includes one or more of the following.
(1) Sixth indication information for indicating that the handover time of the terminal includes the sum of the PCell handover time of the terminal and the PSCell addition time of the terminal.
(2) Seventh indication information for indicating that the handover time of the terminal includes the maximum value of the PCell handover time of the terminal and the PSCell addition time of the terminal.
(3) Eighth indication information for indicating that the handover time of the terminal includes the PCell handover time of the terminal and/or the PSCell addition time of the terminal.
(4) Ninth indication information for indicating that the handover time of the terminal includes the sum of the PCell search time of the terminal and the PSCell search time of the terminal.
(5) Tenth indication information for indicating that the handover time of the terminal includes the sum of the PCell search time of the terminal, the PCell synchronization time of the terminal, the PSCell search time of the terminal, and the PSCell synchronization time of the terminal.

According to some embodiments of the disclosure, a length of the handover time of the terminal is a first time length.

In a case that the first information includes the first indication information, the first time length (T1) is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length (T2) is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length (T3) is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length (T4) is: a sum of a time length starting from a moment the terminal receives an RRC message implying the handover to a moment the terminal transmits the MSGA to the PCell, and a time length for the terminal to perform the PSCell addition.

Or, in a case that the first information includes the fifth indication information, the first time length (T5) is: a sum of a time length starting from a moment the terminal receives an RRC message implying the handover to a moment the terminal receives the MSGB transmitted by the PCell, and a time length for the terminal to perform the PSCell addition.

In an implementation of the disclosure, the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

According to some embodiments of the disclosure, the method also includes the following.

The terminal obtains a first threshold. The first threshold is related to a channel quality.

When the channel quality is higher than and/or equal to a first value of the first threshold, the terminal determines to perform a PSCell addition after transmitting message 1 (MSG1) to the PCell.

Or, when the channel quality is higher than and/or equal to a second value of the first threshold, the terminal determines to perform a PSCell addition after receiving message 2 (MSG2) transmitted by the PCell.

Or, when the channel quality is higher than and/or equal to a third value of the first threshold, the terminal determines to perform a PSCell addition after receiving message 4 (MSG4) transmitted by the PCell.

Or, when the channel quality is lower than and/or equal to a first value of the first threshold, and the channel quality is higher than and/or equal to a second value of the first threshold, the terminal determines to perform a PSCell addition after receiving MSG2 transmitted by the PCell.

Or, when the channel quality is lower than and/or equal to the second value of the first threshold, and the channel quality is higher than and/or equal to the third value of the first threshold, the terminal determines to perform a PSCell addition after receiving MSG4 transmitted by the PCell.

Or, when the channel quality is higher than and/or equal to a fourth value of the first threshold, the terminal determines to perform a PSCell addition after transmitting message A (MSGA) to the PCell.

Or, when the channel quality is higher than and/or equal to a fifth value of the first threshold, the terminal determines to perform a PSCell addition after receiving message B (MSGB) transmitted by the PCell.

Or, when the channel quality is lower than and/or equal to the fourth value of the first threshold, and the channel quality is higher than and/or equal to the fifth value of the first threshold, the terminal determines to perform a PSCell addition after receiving MSGB transmitted by the PCell.

Optionally, the first threshold includes at least one of: reference signal receiving power (RSRP), reference signal receiving quality (RSRQ), or signal to interference plus noise ratio (SINR). The channel quality includes at least one of: RSRP, RSRQ, or SINR, and the channel quality is obtained by terminal measurement.

According to some embodiments of the disclosure, the method also includes the following.

The terminal obtains a second threshold. The second threshold is related to a channel quality.

When the channel quality is higher than and/or equal to a first value of the second threshold, the handover time of the terminal includes the sum of the PCell handover time and the PSCell addition time.

When the channel quality is higher than and/or equal to a second value of the second threshold, the handover time of the terminal includes the maximum value of the PCell handover time and the PSCell addition time.

When the channel quality is higher than and/or equal to a third value of the second threshold, the handover time of the terminal includes the PCell handover time and/or the PSCell addition time.

When the channel quality is higher than and/or equal to a fourth value of the second threshold, the handover time of the terminal includes the sum of the PCell cell search time and the PSCell cell search time.

When the channel quality is higher than and/or equal to a fifth value of the second threshold, the handover time of the terminal includes the sum of the PCell cell search time, the PCell synchronization time, the PSCell cell search time, and the PSCell synchronization time.

Optionally, the second threshold includes at least one of: RSRP, RSRQ, or SINR. The channel quality includes at least one of: RSRP, RSRQ, or SINR, and the channel quality is obtained by terminal measurement.

According to some embodiments of the disclosure, the method also includes the following.

The terminal transmits third information to a network side.

The third information includes one or more of the following.
(1) Whether the terminal supports performing a PCell handover and a PSCell addition based on a parallel processing.
   When performing the handover with PSCell addition (HO with PSCell) in parallel, the terminal handles the PCell handover and PSCell addition concurrently. In this case, the overall time taken to complete the HO with PSCell amounts to the larger of the two durations-the PCell handover delay and the PSCell addition delay-represented as max (PCell handover delay, PSCell addition delay).
(2) Whether the terminal supports performing a PCell handover and a PSCell addition based on a serial processing.
   When performing the handover with PSCell addition (HO with PSCell) in serial, the terminal sequentially performs the PCell handover and the PSCell addition, with the PSCell addition taking place either after the entire PCell handover is finished or following the majority of the PCell handover procedures. In this scenario, the total time needed to complete the handover with PSCell exceeds that of the parallel mode, calculated as PCell handover delay plus PSCell addition delay plus T (where T denotes the time relevant to when the terminal performs the PSCell addition during the PCell PRACH stage).
(3) Whether the terminal supports that the handover time includes the sum of the PCell handover time and the PSCell addition time.
(4) Whether the terminal supports that the handover time includes the maximum value of the PCell handover time and the PSCell addition time.
(5) Whether the terminal supports that the handover time includes the PCell handover time and/or the PSCell addition time.
(6) Whether the terminal supports that the handover time includes the sum of the PCell search time and the PSCell search time.
(7) Whether the terminal supports that the handover time includes the sum of the PCell search time, the PCell synchronization time, the PSCell search time, and the PSCell synchronization time.
(8) Eleventh indication information for indicating to perform a PSCell addition after a second operation.
   That is, the eleventh indication information reports at which specific stage the PSCell addition is to be performed.
(9) Twelfth indication information for indicating that the terminal supports a parallel processing of a third operation.
   That is, the twelfth indication information reports which parts are supported for parallel processing.
(10) Thirteenth indication information for indicating that the terminal supports a serial processing of a fourth operation.

That is, the thirteenth indication information reports which parts are supported for serial processing.

It should be understood that the network side, using the third information as a reference, may transmit the first information to the terminal, that is, the network side may indicate the terminal on when to conduct the PSCell addition based on either the reported terminal capabilities or actual needs of th terminal.

Optionally, the second operation includes one of:
(1) transmitting message 1 (MSG1) to the PCell;
(2) receiving message 2 (MSG2) transmitted by the PCell;
(3) transmitting message 3 (MSG3) to the PCell;
(4) receiving message 4 (MSG4) transmitted by the PCell;
(5) transmitting message A (MSGA) to the PSCell; or
(6) receiving message B (MSGB) transmitted by the PCell.

According to some embodiments of the disclosure, the method also includes the following.

The terminal determines a first mode. The first mode represents a mode in which the terminal performs the handover with the PSCell addition.

In an implementation of the disclosure, the step of determining the first mode by the terminal includes the following.

The terminal receives fourth information from the network side.

The terminal determines the first mode according to the fourth information (that is, how to carry out the handover with the PSCell addition is obtained based on the network indication).

Or, the terminal determines the first mode according to the protocol agreement (that is, the terminal obtains how to perform the handover with the PSCell addition through the protocol agreement).

According to some embodiments of the disclosure, the fourth information includes one or more of the following.
(1) Fourteenth indication information for indicating whether the terminal performs the handover with a PSCell addition through a parallel processing.
(2) Fifteenth indication information for indicating whether the terminal performs the handover with a PSCell addition through a serial processing.
(3) Sixteenth instruction information for indicating that a fifth operation is to be processed in parallel.
   That is, the sixteenth indication information is used to further indicate at which specific stage the terminal performs the parallel processing.
(4) Seventeenth instruction information for indicating that a sixth operation is to be processed in serial.

That is, the seventeenth indication information is used to further indicate at which specific stage the terminal performs the serial processing.

In an implementation of the disclosure, the protocol agreement includes predefined rules, and the predefined rules include the following.

If the network side configures the SMTC for the target PSCell, the serial processing mode is adopted; otherwise (that is, the above condition is not satisfied), the parallel processing mode is adopted.

According to embodiments of the disclosure, the third operation or the fourth operation or the fifth operation or the sixth operation includes one or more of the following.
(1) A cell detection.
   That is, the parallel processing or the serial processing may be performed on the cell detection.
(2) Time domain synchronization.
   That is, the parallel processing or the serial processing may be performed on the time domain synchronization.
(3) Frequency domain synchronization.
   That is, the parallel processing or the serial processing may be performed on the frequency domain synchronization.
(4) An automatic gain control (AGC).
   That is, the parallel processing or the serial processing may be performed on the automatic gain control.
(5) a random access.

That is, the parallel processing or the serial processing may be performed at the random access.

The cell search includes at least one of the AGC and the cell detection. The cell detection may also be described as PSS/SSS detection, that is, primary synchronization signal/secondary synchronization signal detection.

The following describes the implementation of the disclosure in combination with specific examples.

The terminal receives the first information transmitted by the network, where the first information indicates the terminal when to perform the PSCell addition.

(1) Optionally, the first information may include the first indication information. The first indication information indicates that the terminal performs the PSCell addition after transmitting the PRACH preamble to the PCell (that is, after transmitting message 1 (MSG1) to the PCell).

Based on the indication of the first indication information, the time length for the terminal to complete the handover with the PSCell addition (HO with PSCell) is T1.

T1 = the time starting from a moment of receiving the RRC message carrying the handover (HO with PSCell) to a moment the terminal transmitting the preamble to the PCell + the time length for the terminal to perform the PSCell addition.

The time length time for the terminal to perform the PSCell addition may be understood as the time starting from a moment when the terminal transmits the preamble to the PCell to a moment when the terminal transmits the preamble to the PSCell, or from a moment when the terminal transmits the preamble to the PCell to a moment when the terminal transmits message A (MSGA) to the PSCell.

However, since the random access of the mobile network (MN) PCell has not yet been completed, performing the PSCell addition at this stage may cause a certain waste of resources due to the risk of PCell handover failure.

(2) Optionally, the first information may include the second indication information. The second indication information indicates the terminal to perform the PSCell addition after receiving the RAR (message 2 (MSG2)) transmitted by the PCell.

Based on the indication of the second indication information, the time length for the terminal to complete the handover with the PSCell addition (HO with PSCell) is T2.

T2 = time starting from a moment of receiving the RRC message carrying the handover (HO with PSCell) to a moment the terminal receives the RAR transmitted by the PCell + the time length for the terminal to perform the PSCell addition.

The time length for the terminal to perform the PSCell addition may be understood as the time starting from a moment the terminal receives the RAR transmitted by the PCell to a moment the terminal transmits the preamble to the PSCell, or the time starting from a moment the terminal receives the RAR transmitted by the PCell to a moment the terminal transmits the MSGA to the PSCell.

Compared with T1, T2 is longer, and the extra time in T2 corresponds to the time for the terminal to receive the RAR transmitted by the PCell. Despite the fact that the random access of the MN PCell remains incomplete, the PSCell addition is undertaken at this stage. Compared with the scheme indicated by the first indication information, the robustness may be somewhat improved; however, there still exists the risk of PCell handover failure, which potentially leads to a certain amount of resource wastage.

(3) Optionally, the first information may include the third indication information. The third indication information indicates the terminal to perform the PSCell addition after receiving the message 4 (MSG4) transmitted by the PCell.

Based on the indication of the third indication information, the time length for the terminal to complete the handover with the PSCell addition (HO with PSCell) is T3.

T3 = the time starting from a moment of receiving the RRC message carrying the handover (HO with PSCell) to a moment the terminal receives the MSG4 transmitted by the PCell + the time length for the terminal to perform the PSCell addition.

The time length for the terminal to perform the PSCell addition may be understood as: the time starting from a moment the terminal receives the MSG4 transmitted by the PCell to a moment the terminal transmits the preamble to the PSCell or the time starting from a moment the terminal receives the MSG4 transmitted by the PCell to a moment the terminal transmits the MSGA to the PSCell.

Compared with T1 and T2, T3 is longer. Compared with T1, the extra time in T3 encompasses the time for the terminal to receive the RAR transmitted by the PCell, the time it takes for the terminal to transmit MSG3, and the time required for the terminal to receive MSG4. However, when the terminal carries out the PSCell addition as per the indication in the third indication information, it is possible that the handover of the MN PCell has been successfully concluded before this addition, which could potentially enhance the robustness of the system.

Furthermore, when considering a two-step RACH procedure, the first information may include the fourth indication information, which indicates the terminal to perform the PSCell addition after transmitting message A (MSGA) to the PCell.

Based on the indication of the fourth indication information, the time length for the terminal to complete the handover with the PSCell addition (HO with PSCell) is T4.

T4 = the time starting from a moment of receiving the RRC message carrying the handover (HO with PSCell) to a moment the terminal transmits the MSGA to the PCell + the time length for the terminal to perform the PSCell addition.

The time length for the terminal to perform the PSCell addition may be understood as: the time starting from a moment the terminal transmits the MSGA to the PCell to a moment the terminal transmits the preamble to the PSCell or the time starting from a moment the terminal transmits the MSGA to the PCell to a moment the terminal transmits the MSGA to the PSCell.

However, since the random access of the MN PCell has not been completed, performing the PSCell addition at this stage may cause a certain waste of resources due to the risk of PCell handover failure.

Furthermore, when considering a two-step RACH procedure, the first information may include the fifth indication information, which indicates the terminal to perform the PSCell addition after receiving the MSGB transmitted by the PCell.

Based on the indication of the fifth indication information, the time length for the terminal to complete the handover with the PSCell addition (HO with PSCell) is T5.

T5 = the time starting from a moment of receiving the RRC message carrying the handover (HO with PSCell) to a moment the terminal receives the MSGB transmitted by the PCell + the time length for the terminal to perform the PSCell addition.

The time length for the terminal to perform the PSCell addition may be understood as: the time starting from a moment the terminal receives the MSGB transmitted by the PCell to a moment the terminal transmits the preamble to the PSCell, or the time starting from a moment the terminal receives the MSGB transmitted by the PCell to a moment the terminal transmits the MSGA to the PSCell.

Compared with T4, T5 is longer, and compared with T4, the extra time in T5 includes the time for the terminal to receive the MSGB transmitted by the PCell. However, since the random access of the MN PCell has not been completed, the PSCell addition is performed at this stage. Compared with the scheme indicated by the first indication information, the robustness may be improved to a certain extent, but there is still the risk of PCell handover failure, which may bring a certain waste of resources.

The introduction of the above first information primarily stems from the following considerations: the distinction between four-step and two-step PRACH procedures.

Taking the four-step RACH procedure as an example, the random access procedure includes MSG1, MSG2, MSG3, and MSG4. Upon receiving the RRC message carrying the handover with the PSCell addition (HO with PSCell), the terminal may decide whether to carry out the PSCell addition before or after the PRACH phase of the PCell handover is concluded.

If the PSCell addition is executed prior to the completion of the PRACH, it requires determining at which stage among MSG1, MSG2, MSG3, and MSG4 to undertake this process. As performing the PSCell addition earlier results in a shorter delay for completing the handover with the PSCell addition, and consequently, a shorter scheduling restriction, this allows for a quicker entry into the dual connectivity mode. However, conducting the PSCell addition before the PRACH of the PCell handover is finalized presents a challenge, as the PCell handover's random access still bears the potential for failure. If the random access of the PCell handover indeed fails, any PSCell addition performed in advance might lead to a certain degree of resource wastage.

The same problem also exists in the two-step RACH procedure, that is, it needs to determine whether to perform the PSCell addition before or after the completion of the PRACH for the PCell handover. Should the PSCell addition be conducted before the PRACH concludes, it would require identifying the appropriate stage - either MSGA or MSGB - to perform this action.

To solve the above problems, the network may indicate to the terminal at which stage to perform the PSCell addition. If the network aims to expedite entering the dual connection mode, it may signal the terminal to perform the PSCell addition as early as feasible. However, at this time, it needs to bear a certain risk of handover failure.

If the network desires to minimize resource wastage, improve the robustness of dual connectivity setup, and does not face an immediate requirement to establish dual connectivity, it may indicate the terminal to perform the PSCell addition at a later stage within the PRACH procedure of the PCell handover.

Furthermore, the terminal receives the first threshold issued by the network, and the first threshold is related to the channel quality, and the channel quality includes but not limited to: RSRP and/or RSRQ and/or SINR. The first threshold may have multiple values.

When the channel quality of the terminal satisfies the first threshold, the terminal may determine when to perform the PSCell addition.

Optionally, when the channel quality is higher than and/or equal to the first value of the first threshold, the terminal may perform the PSCell addition after transmitting the MSG1 to the PCell.

When the channel quality is higher than and/or equal to the second value of the first threshold, the terminal may perform the PSCell addition after receiving the MSG2 transmitted by the PCell.

When the channel quality is higher than and/or equal to the third value of the first threshold, the terminal may perform the PSCell addition after receiving the MSG4 transmitted by the PCell.

The above three threshold values may also be used in any combination.

For example, when the channel quality is higher than and/or equal to the first value of the first threshold, the terminal may perform the PSCell addition after transmitting the MSG1 to the PCell.

When the channel quality is lower than and/or equal to the first value of the first threshold, but the channel quality is higher than and/or equal to the second value of the first threshold, the terminal may perform the PSCell addition after receiving the MSG2 transmitted by the PCell.

When the channel quality is lower than and/or equal to the second value of the first threshold, but the channel quality is higher than and/or equal to the third value of the first threshold, the terminal may perform the PSCell addition after receiving the MSG4 transmitted by the PCell.

Optionally, when the channel quality is higher than and/or equal to the fourth value of the first threshold, the terminal may perform the PSCell addition after transmitting the MSGA to the PCell.

When the channel quality is higher than and/or equal to the fifth value of the first threshold, the terminal may perform the PSCell addition after receiving the MSGB transmitted by the PCell.

The above two threshold values may also be used in any combination. For example, when the channel quality is higher than and/or equal to the fourth value of the first threshold, the terminal may perform the PSCell addition after transmitting the MSGA to the PCell; and when the channel quality is lower than and/or equal to the fourth value of the first threshold value, but when the channel quality is higher than and/or equal to the fifth value of the first threshold, the terminal may perform the PSCell addition after receiving the MSGB transmitted by the PCell.

Furthermore, considering that the specific implementations across terminals may vary, the terminal may also report one or more pieces of the following capability information back to the network.
(1) Whether the terminal supports the handover with the PSCell addition (HO with PSCell) according to the parallel mode.
(2) Whether the terminal supports the handover with the PSCell addition according to the parallel mode.

The so-called parallel handover with the PSCell addition means that the terminal performs the PCell handover and the PSCell addition at the same time. At this time, the time length for completing the handover with the PSCell addition is max (PCell handover delay, PSCell addition delay).

The so-called serial handover with the PSCell addition means that the terminal performs the PCell handover and the PSCell addition sequentially, performing the PSCell addition either after fully completing the PCell handover or after finishing most of the PCell handover processes. At this time, the time required to complete the handover with the PSCell addition is longer than the time in parallel mode, which equates to PCell handover delay + PSCell addition delay + T (where T pertains to the specific stage during the PCell PRACH at which the terminal undertakes the PSCell addition).

Regarding the serial mode in more detail, the terminal may report at which stage the PSCell addition is to be performed, including scenarios where the PSCell addition occurs after MSG1, after MSG2, after MSG3, after MSGA, or after MSGB.

Regarding the parallel mode, there exists a partial parallel approach, and the terminal may also report which parallel processing parts it can handle, including: whether the cell detections can occur in parallel (that is, whether the PCell and PSCell cell detections can be performed at the same time); and/or, whether the time domain/frequency domain synchronizations may be processed in parallel (that is, whether the time domain/frequency domain synchronization of the PCell cell and the time domain/frequency domain synchronization of the PSCell cell may be performed at the same time); and/or, whether the automatic gain controls (AGCs) may be processed in parallel (that is, whether the AGC of the PCell cell and the AGC of the PSCell cell may be performed at the same time); and/or, whether the random accesses may be processed in parallel (that is, whether the PRACH of the PCell cell and the PRACH of the PSCell cell may be performed at the same time).

Regarding the serial mode, there exists a partial serial approach, and the terminal may also report which serial processing parts it can handle, including: whether the cell detections can occur in serial (that is, whether the PCell cell detection and the PSCell cell detection may be performed serially); and/or, whether the time domain/frequency domain synchronizations need serial processing (that is, whether the time domain/frequency domain synchronization of the PCell cell and the time domain/frequency domain synchronization of the PSCell cell may be performed serially); and/or, whether the AGCs need serial processing (that is, whether the AGC of the PCell cell and the AGC of the PSCell cell may be performed serially); and/or, whether the random accesses need serial processing (that is, whether the PRACH of the PCell cell and the PRACH of the PSCell cell may be performed serially).

Further, the terminal can obtain how to perform the handover with the PSCell addition. The ways by which the terminal obtains this include: receiving network indication information (referred to as the fourth information), or adhering to predefined protocol rules.

The above fourth information includes indicating whether the terminal performs the handover with the PSCell addition in a parallel mode, and/or indicates whether the terminal performs the handover with the PSCell addition in a serial mode.

Further, regarding the parallel mode, it may further indicate at which stage the terminal performs the parallel processing, including one or more of the following.
(1) Cell detections processed in parallel.
(2) Time domain/frequency domain synchronizations processed in parallel.
(3) AGCs processed in parallel.
(4) Random accesses processed in parallel.

Further, regarding the serial mode, it may further indicate at which stage the terminal performs the serial processing, including one or more of the following.
(1) Cell detections processed serially.
(2) Time domain/frequency domain synchronizations processed serially.
(3) AGCs processed serially.
(4) Random accesses processed serially.

The predefined protocol rules include: if the network configures SSB-based radio resource management (RRM) measurement timing configuration (SMTC) for the target PSCell (which can be configured through targetcellSMTC-SCG), the serial mode is used; and if the above condition is not satisfied, the parallel mode is used.

In the prior art, the PCell handover and the PSCell addition are executed independently. However, during the process of the handover with the PSCell addition, a single RRC message triggers the terminal to perform both the PCell handover and the PSCell addition. Due to the absence of explicit regulations governing the execution sequence of the PCell handover and the PSCell addition, the behavior of the terminal during such a handover process becomes unpredictable, and the time required to complete the handover with the PSCell addition is indeterminate, which may impact network scheduling. Nevertheless, according to embodiments disclosed, the terminal may determine the time to perform the PSCell addition or identify the specific stage at which to perform the PSCell addition, thereby assisting in network scheduling, clarifying the terminal's behavior throughout the process of the handover with the PSCell addition, and enhancing the overall system performance.

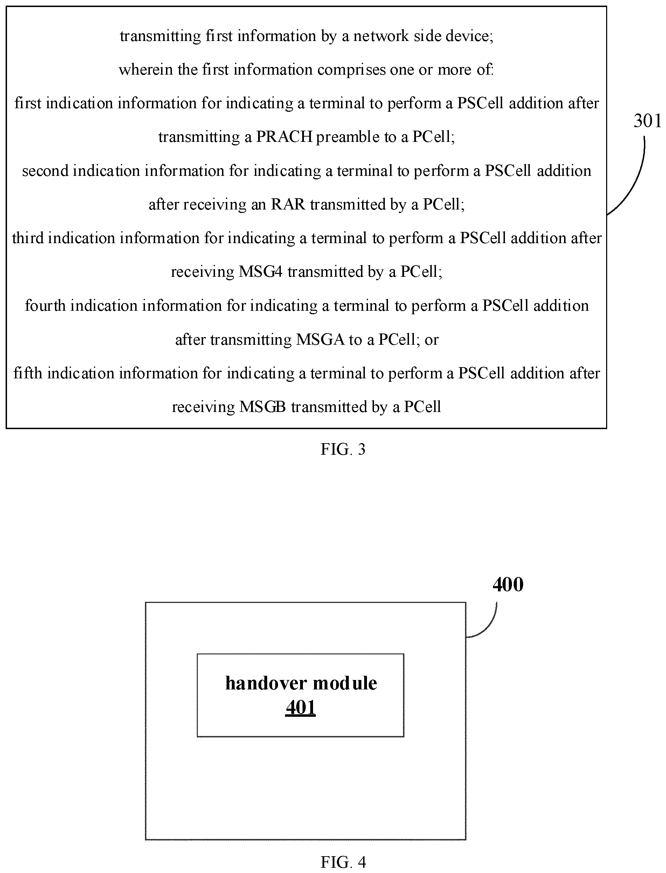

Referring to FIG. 3, some embodiments of the disclosure provide a handover method, and a specific step within this method includes step 301.

Step 301, the network side device transmits first information.

The first information includes one or more of: first indication information for indicating a terminal to perform a PSCell addition after transmitting a PRACH preamble to a PCell; second indication information for indicating a terminal to perform a PSCell addition after receiving an RAR transmitted by a PCell; third indication information for indicating a terminal to perform a PSCell addition after receiving MSG4 transmitted by a PCell; fourth indication information for indicating a terminal to perform a PSCell addition after transmitting MSGA to a PCell; or fifth indication information for indicating a terminal to perform a PSCell addition after receiving MSGB transmitted by a PCell.

According to some embodiments of the disclosure, the method also includes the following.

The network side device transmits second information. The second information includes one or more of: sixth indication information for indicating that the handover time of the terminal includes the sum of the PCell handover time of the terminal and the PSCell addition time of the terminal; seventh indication information for indicating that the handover time of the terminal includes the maximum value of the PCell handover time of the terminal and the PSCell addition time of the terminal; eighth indication information for indicating that the handover time of the terminal includes the PCell handover time of the terminal and/or the PSCell addition time of the terminal; ninth indication information for indicating that the handover time of the terminal includes the sum of the PCell search time of the terminal and the PSCell search time of the terminal; or tenth indication information for indicating that the handover time of the terminal includes the sum of the PCell search time of the terminal, the PCell synchronization time of the terminal, the PSCell search time of the terminal, and the PSCell synchronization time of the terminal.

According to some embodiments of the disclosure, a length of the handover time of the terminal is a first time length.

In a case that the first information includes the first indication information, the first time length is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length is: a sum of a time length starting from a moment the terminal receives an RRC message implying the handover to a moment the terminal transmits the MSGA to the PCell and a time length for the terminal to perform the PSCell addition.

Or, in a case that the first information includes the fifth indication information, the first time length is: a sum of a time length starting from a moment the terminal receives an RRC message implying the handover to a moment the terminal receives the MSGB transmitted by the PCell, and a time length for the terminal to perform the PSCell addition.

In an implementation of the disclosure, the time length for the terminal to perform the PSCell addition includes: the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

According to some embodiments of the disclosure, the method also includes the following.

The network side device transmits a second threshold. The second threshold is related to a channel quality.

When the channel quality is higher than and/or equal to a first value of the second threshold, the handover time of the terminal includes the sum of the PCell handover time and the PSCell addition time.

When the channel quality is higher than and/or equal to a second value of the second threshold, the handover time of the terminal includes the maximum value of the PCell handover time and the PSCell addition time.

When the channel quality is higher than and/or equal to a third value of the second threshold, the handover time of the terminal includes the PCell handover time and/or the PSCell addition time.

When the channel quality is higher than and/or equal to a fourth value of the second threshold, the handover time of the terminal includes the sum of the PCell cell search time and the PSCell cell search time.

When the channel quality is higher than and/or equal to a fifth value of the second threshold, the handover time of the terminal includes the sum of the PCell cell search time, the PCell synchronization time, the PSCell cell search time, and the PSCell synchronization time.

According to some embodiments of the disclosure, the method also includes the following.

The network side device receives third information.

The third information includes one or more of: whether the terminal supports performing a PCell handover and a PSCell addition based on a parallel processing; whether the terminal supports performing a PCell handover and a PSCell addition based on a serial processing; whether the terminal supports that the handover time comprises the sum of the PCell handover time and the PSCell addition time; whether the terminal supports that the handover time comprises the maximum value of the PCell handover time and the PSCell addition time; whether the terminal supports that the handover time comprises the PCell handover time and/or the PSCell addition time; whether the terminal supports that the handover time comprises the sum of the PCell search time and the PSCell search time; whether the terminal supports that the handover time comprises the sum of the PCell search time, the PCell synchronization time, the PSCell search time, and the PSCell synchronization time; eleventh indication information for indicating to perform a PSCell addition after a second operation; twelfth indication information for indicating that the terminal supports a parallel processing of a third operation; or thirteenth indication information for indicating that the terminal supports a serial processing of a fourth operation.

According to some embodiments of the disclosure, the second operation includes one of: transmitting MSG1 to the PCell; receiving MSG2 transmitted by the PCell; transmitting MSG3 to the PCell; receiving MSG4 transmitted by the PCell; transmitting MSGA to the PSCell; or receiving MSGB transmitted by the PCell.

According to some embodiments of the disclosure, the method also includes the following.

The network side device transmits fourth information.

The fourth information includes one or more of: fourteenth indication information for indicating whether the terminal performs the handover with a PSCell addition through a parallel processing; fifteenth indication information for indicating whether the terminal performs the handover with a PSCell addition through a serial processing; sixteenth instruction information for indicating that a fifth operation is to be processed in parallel; or seventeenth instruction information for indicating that a sixth operation is to be processed in serial.

It may be understood that, for the same content in the embodiments of the network-side method and the terminal-side method, reference may be made to the descriptions provided according to the terminal-side method embodiments illustrated in FIG. 2.

According to some embodiments of the disclosure, the network side may provide an indication specifying the time when the terminal should perform the PSCell addition or at which particular stage the PSCell addition should be executed, thus clarifying the terminal's behavior during the process of the handover with the PSCell addition and enhancing the overall system performance.

Referring to FIG. 4, some embodiments of the disclosure provide a handover apparatus, which is applied to a terminal, and the apparatus 400 includes a handover module 401.

The handover module 401 is configured to perform a handover. A handover time of the terminal includes one or more of: a sum of a PCell handover time and a PSCell addition time; a maximum value of a PCell handover time and a PSCell addition time; a PCell handover time and/or a PSCell addition time; a sum of a PCell search time and a PSCell search time; or a sum of a PCell search time, a PCell synchronization time, a PSCell search time, and a PSCell synchronization time.

According to some embodiments of the disclosure, in a case that a first condition is satisfied, the handover time of the terminal includes one or more of: the sum of the PCell handover time and the PSCell addition time; the sum of the PCell search time and the PSCell search time; or the sum of the PCell search time, the PCell synchronization time, the PSCell search time, and the PSCell synchronization time.

The first condition includes that: the terminal is configured with SMTC for an target unknown PSCell.

According to some embodiments of the disclosure, the apparatus also includes a first obtaining module.

The first obtaining module is configured to obtain first information.

The first information includes one or more of: first indication information for indicating the terminal to perform a PSCell addition after transmitting a PRACH preamble to the PCell; second indication information for indicating the terminal to perform a PSCell addition after receiving an RAR transmitted by the PCell; third indication information for indicating the terminal to perform a PSCell addition after receiving MSG4 transmitted by the PCell; fourth indication information for indicating the terminal to perform a PSCell addition after transmitting MSGA to the PCell; or fifth indication information for indicating the terminal to perform a PSCell addition after receiving MSGB transmitted by the PCell.

According to some embodiments of the disclosure, the apparatus also includes a second obtaining module.

The second obtaining module is configured to obtain second information.

The second information includes one or more of: sixth indication information for indicating that the handover time of the terminal includes the sum of the PCell handover time of the terminal and the PSCell addition time of the terminal; seventh indication information for indicating that the handover time of the terminal includes the maximum value of the PCell handover time of the terminal and the PSCell addition time of the terminal; eighth indication information for indicating that the handover time of the terminal includes the PCell handover time of the terminal and/or the PSCell addition time of the terminal; ninth indication information for indicating that the handover time of the terminal includes the sum of the PCell search time of the terminal and the PSCell search time of the terminal; or tenth indication information for indicating that the handover time of the terminal includes the sum of the PCell search time of the terminal, the PCell synchronization time of the terminal, the PSCell search time of the terminal, and the PSCell synchronization time of the terminal.

In some embodiments of the disclosure, a length of the handover time of the terminal is a first time length.

In a case that the first information includes the first indication information, the first time length is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length is: a sum of a time length starting from a moment the terminal receives an RRC message implying the handover to a moment the terminal transmits the MSGA to the PCell, and a time length for the terminal to perform the PSCell addition.

Or, in a case that the first information includes the fifth indication information, the first time length is: a sum of a time length starting from a moment the terminal receives an RRC message implying the handover to a moment the terminal receives the MSGB transmitted by the PCell, and a time length for the terminal to perform the PSCell addition.

In an implementation of the disclosure, the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

According to some embodiments of the disclosure, the apparatus also includes a third obtaining module.

The third obtaining module is configured to obtain a first threshold, in which the first threshold is related to a channel quality.

When the channel quality is higher than and/or equal to the first value of the first threshold, it is determined to perform a PSCell addition after transmitting the MSG1 to the PCell.

When the channel quality is higher than and/or equal to the second value of the first threshold, it is determined to perform a PSCell addition after receiving the MSG2 transmitted by the PCell.

When the channel quality is higher than and/or equal to the third value of the first threshold, it is determined to perform a PSCell addition after receiving the MSG4 transmitted by the PCell.

When the channel quality is lower than and/or equal to the first value of the first threshold, and the channel quality is higher than and/or equal to the second value of the first threshold, it is determined to perform a PSCell addition after receiving the MSG2 transmitted by the PCell.

When the channel quality is lower than and/or equal to the second value of the first threshold, and the channel quality is higher than and/or equal to the third value of the first threshold, it is determined to perform a PSCell addition after receiving the MSG4 transmitted by the PCell.

When the channel quality is higher than and/or equal to the fourth value of the first threshold, it is determined to perform a PSCell addition after transmitting the MSGA to the PCell.

When the channel quality is higher than and/or equal to the fifth value of the first threshold, it is determined to perform a PSCell addition after receiving the MSGB transmitted by the PCell.

When the channel quality is lower than and/or equal to the fourth value of the first threshold, and the channel quality is higher than and/or equal to the fifth value of the first threshold, it is determined to perform a PSCell addition after receiving the MSGB transmitted by the PCell.

According to some embodiments of the disclosure, the apparatus further includes a fourth obtaining module.

The fourth obtaining module is configured to obtain a second threshold, in which the second threshold is related to a channel quality.

When the channel quality is higher than and/or equal to the first value of the second threshold, the handover time of the terminal includes: the sum of the PCell handover time and the PSCell addition time.

When the channel quality is higher than and/or equal to the second value of the second threshold, the handover time of the terminal includes the maximum value of the PCell handover time and the PSCell addition time.

When the channel quality is higher than and/or equal to the third value of the second threshold, the handover time of the terminal includes the PCell handover time and/or the PSCell addition time.

When the channel quality is higher than and/or equal to the fourth value of the second threshold, the handover time of the terminal includes the sum of the PCell cell search time and the PSCell cell search time.

When the channel quality is higher than and/or equal to the fifth value of the second threshold, the handover time of the terminal includes the sum of the PCell cell search time, the PCell synchronization time, the PSCell cell search time, and the PSCell synchronization time.

According to some embodiments of the disclosure, the apparatus further includes a first transmitting module.

The first transmitting module is configured to transmit third information to the network side device.

The third information includes one or more of: whether the terminal supports performing a PCell handover and a PSCell addition based on a parallel processing; whether the terminal supports performing a PCell handover and a PSCell addition based on a serial processing; whether the terminal supports that the handover time comprises the sum of the PCell handover time and the PSCell addition time; whether the terminal supports that the handover time comprises the maximum value of the PCell handover time and the PSCell addition time; whether the terminal supports that the handover time comprises the PCell handover time and/or the PSCell addition time; whether the terminal supports that the handover time comprises the sum of the PCell search time and the PSCell search time; whether the terminal supports that the handover time comprises the sum of the PCell search time, the PCell synchronization time, the PSCell search time, and the PSCell synchronization time; eleventh indication information for indicating to perform a PSCell addition after a second operation; twelfth indication information for indicating that the terminal supports a parallel processing of a third operation; or thirteenth indication information for indicating that the terminal supports a serial processing of a fourth operation.

According to some embodiments of the disclosure, the second operation includes one of: transmitting MSG1 to the PCell; receiving MSG2 transmitted by the PCell; transmitting MSG3 to the PCell; receiving MSG4 transmitted by the PCell; transmitting MSGA to the PSCell; or receiving MSGB transmitted by the PCell.

According to some embodiments of the disclosure, the apparatus also includes a second determining module.

The second determining module is configured to determine a first mode, in which the first mode represents a mode in which the terminal performs the handover with the PSCell addition.

According to some embodiments of the disclosure, the second determination module is further configured to receive fourth information from the network side device; determine the first mode according to the fourth information; or determine the first mode according to a protocol agreement.

According to some embodiments of the disclosure, the fourth information includes one or more of: fourteenth indication information for indicating whether the terminal performs the handover with a PSCell addition through a parallel processing; fifteenth indication information for indicating whether the terminal performs the handover with a PSCell addition through a serial processing; sixteenth instruction information for indicating that a fifth operation is to be processed in parallel; or seventeenth instruction information for indicating that a sixth operation is to be processed in serial.

In an implementation of the disclosure, the protocol agreement includes predefined rules, and the predefined rules include the following.

If the network side configures the SMTC for the target PSCell, the serial processing mode is adopted; otherwise (that is, the above condition is not satisfied), the parallel processing mode is adopted.

According to some embodiments of the disclosure, the third operation or the fourth operation or the fifth operation or the sixth operation includes one or more of: a cell detection; a time domain synchronization; a frequency domain synchronization; an automatic gain control; or a random access.

The apparatus according to embodiments of the disclosure is capable of realizing each of the processes implemented according to the method embodiments presented in FIG. 2, thereby achieving the same technical effect. In order to prevent redundancy, these details will not be reiterated herein.

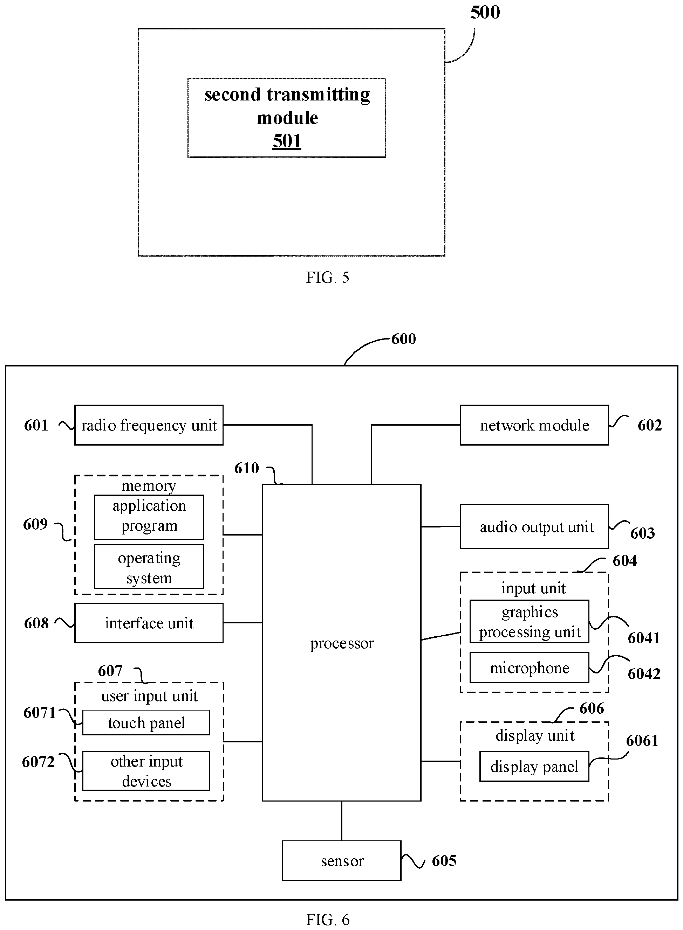

Referring to FIG. 5, some embodiments of the disclosure provide a handover apparatus, which is applied to a network side device. The apparatus 500 includes a second transmitting module 501.

The second transmitting module 501 is configured to transmit first information.

The first information includes one or more of: first indication information for indicating a terminal to perform a PSCell addition after transmitting a PRACH preamble to a PCell; second indication information for indicating a terminal to perform a PSCell addition after receiving an RAR transmitted by a PCell; third indication information for indicating a terminal to perform a PSCell addition after receiving MSG4 transmitted by a PCell; fourth indication information for indicating a terminal to perform a PSCell addition after transmitting MSGA to a PCell; or fifth indication information for indicating a terminal to perform a PSCell addition after receiving MSGB transmitted by a PCell.

According to some embodiments of the disclosure, the apparatus also includes a third transmitting module.

The third transmitting module is configured to transmit second information.

The second information includes one or more of: sixth indication information for indicating that the handover time of the terminal includes the sum of the PCell handover time of the terminal and the PSCell addition time of the terminal; seventh indication information for indicating that the handover time of the terminal includes the maximum value of the PCell handover time of the terminal and the PSCell addition time of the terminal; eighth indication information for indicating that the handover time of the terminal includes the PCell handover time of the terminal and/or the PSCell addition time of the terminal; ninth indication information for indicating that the handover time of the terminal includes the sum of the PCell search time of the terminal and the PSCell search time of the terminal; or tenth indication information for indicating that the handover time of the terminal includes the sum of the PCell search time of the terminal, the PCell synchronization time of the terminal, the PSCell search time of the terminal, and the PSCell synchronization time of the terminal.

Optionally, a length of the handover time of the terminal is a first time length.

In a case that the first information includes the first indication information, the first time length is: a sum of a time length starting from a moment the terminal receives an RRC message implying the handover to a moment the terminal transmits the preamble to the PCell, and a time length for the terminal to perform the PSCell addition.

Or, in a case that the first information includes the second indication information, the first time length is: a sum of a time length starting from a moment the terminal receives an RRC message implying the handover to a moment the terminal receives the RAR transmitted by the PCell, and a time length for the terminal to perform the PSCell addition.

Or, in a case that the first information includes the third indication information, the first time length is: a sum of a time length starting from a moment the terminal receives an RRC message implying the handover to a moment the terminal receives the MSG4 transmitted by the PCell, and a time length for the terminal to perform the PSCell addition.

Or, in a case that the first information includes the fourth indication information, the first time length is: a sum of a time length starting from a moment the terminal receives an RRC message implying the handover to a moment the terminal transmits the MSGA to the PCell and a time length for the terminal to perform the PSCell addition.

Or, in a case that the first information includes the fifth indication information, the first time length is: a sum of a time length starting from a moment the terminal receives an RRC message implying the handover to a moment the terminal receives the MSGB transmitted by the PCell, and a time length for the terminal to perform the PSCell addition.

Optionally, the time length for the terminal to perform the PSCell addition includes: the time length for the terminal to perform the PSCell addition includes: a time length starting from a moment the terminal receives the MSGB transmitted by the PCell to a moment the terminal transmits a preamble to a PSCell; or, a time length starting from a moment the terminal receives the MSGB transmitted by the PCell to a moment the terminal transmits MSGA to a PSCell; or, a time length starting from a moment the terminal receives the RAR transmitted by the PCell to a moment the terminal transmits a preamble to a PSCell; or, a time length starting from a moment the terminal receives the RAR transmitted by the PCell to a moment the terminal transmits MSGA to a PSCell; or, a time length starting from a moment the terminal receives the MSG4 transmitted by the PCell to a moment the terminal transmits a preamble to a PSCell; or, a time length starting from a moment the terminal receives the MSG4 transmitted by the PCell to a moment the terminal transmits MSGA to a PSCell; or, a time length starting from a moment the terminal receives the MSGA transmitted by the PCell to a moment the terminal transmits a preamble to a PSCell; or, a time length starting from a moment the terminal receives the MSGA transmitted by the PCell to a moment the terminal transmits MSGA to a PSCell.

According to some embodiments of the disclosure, the apparatus also includes a fourth transmitting module.

The fourth transmitting module is configured to transmit a second threshold. The second threshold is related to a channel quality.

When the channel quality is higher than and/or equal to a first value of the second threshold, the handover time of the terminal includes the sum of the PCell handover time and the PSCell addition time.

When the channel quality is higher than and/or equal to a second value of the second threshold, the handover time of the terminal includes the maximum value of the PCell handover time and the PSCell addition time.

When the channel quality is higher than and/or equal to a third value of the second threshold, the handover time of the terminal includes the PCell handover time and/or the PSCell addition time.

When the channel quality is higher than and/or equal to a fourth value of the second threshold, the handover time of the terminal includes the sum of the PCell cell search time and the PSCell cell search time.

When the channel quality is higher than and/or equal to a fifth value of the second threshold, the handover time of the terminal includes the sum of the PCell cell search time, the PCell synchronization time, the PSCell cell search time, and the PSCell synchronization time.

According to some embodiments of the disclosure, the apparatus also includes a first receiving module.

The first receiving module is configured to receive third information.

The third information includes one or more of: whether the terminal supports performing a PCell handover and a PSCell addition based on a parallel processing; whether the terminal supports performing a PCell handover and a PSCell addition based on a serial processing; whether the terminal supports that the handover time comprises the sum of the PCell handover time and the PSCell addition time; whether the terminal supports that the handover time comprises the maximum value of the PCell handover time and the PSCell addition time; whether the terminal supports that the handover time comprises the PCell handover time and/or the PSCell addition time; whether the terminal supports that the handover time comprises the sum of the PCell search time and the PSCell search time; whether the terminal supports that the handover time comprises the sum of the PCell search time, the PCell synchronization time, the PSCell search time, and the PSCell synchronization time; eleventh indication information for indicating to perform a PSCell addition after a second operation; twelfth indication information for indicating that the terminal supports a parallel processing of a third operation; or thirteenth indication information for indicating that the terminal supports a serial processing of a fourth operation.

Optionally, the second operation includes one of: transmitting MSG1 to the PCell; receiving MSG2 transmitted by the PCell; transmitting MSG3 to the PCell; receiving MSG4 transmitted by the PCell; transmitting MSGA to the PSCell; or receiving MSGB transmitted by the PCell.

According to some embodiments of the disclosure, the apparatus also includes a fifth transmitting module.

The fifth transmitting module is configured to transmit fourth information.

The fourth information includes one or more of: fourteenth indication information for indicating whether the terminal performs the handover with a PSCell addition through a parallel processing; fifteenth indication information for indicating whether the terminal performs the handover with a PSCell addition through a serial processing; sixteenth instruction information for indicating that a fifth operation is to be processed in parallel; or seventeenth instruction information for indicating that a sixth operation is to be processed in serial.

The apparatus according to embodiments of the disclosure is capable of realizing each of the processes implemented according to the method embodiments presented in FIG. 3, thereby achieving the same technical effect. In order to prevent redundancy, these details will not be reiterated herein.

In detail, FIG. 6 is a schematic diagram of a hardware structure of a terminal implementing some embodiments of the disclosure. The terminal 600 includes, but is not limited to at least some following components of: a radio frequency unit 601, a network module 602, an audio output unit 603, an input unit 604, a sensor 605, a display unit 606, a user input unit 607, an interface unit 608, a memory 609, a processor 610, and the like.

Those skilled in the art may understand that the terminal 600 may also include a power supply (such as a battery) for supplying power to various components, and the power supply may be logically connected to the processor 610 through a power management system, so as to manage functions such as charging, discharging, power consumption, and other. The terminal structure in FIG. 6 does not constitute a limitation on the terminal. The terminal may include more or fewer components than illustrated in the figure, or integrate some components, or arrange different components, which will not be repeated herein.

It should be understood that, according to some embodiments of the disclosure, the input unit 604 may include a graphics processing unit (GPU) 6041 and a microphone 6042. The graphics processing unit 6041 is used for processing image data of still pictures or videos obtained by an image capture device (such as a camera) in a video capture mode or an image capture mode. The display unit 606 may include a display panel 6061. The display panel 6061 may be configured in the form of a liquid crystal display, an organic light emitting diode, or the like. The user input unit 607 includes a touch panel 6071 and other input devices 6072. The touch panel 6071 is also called a touch screen. The touch panel 6071 may include two parts, a touch detection device and a touch controller. Other input devices 6072 may include, but are not limited to, physical keyboards, function keys (such as volume control buttons, switch buttons, etc.), trackballs, mice, and joysticks, which will not be repeated herein.

According to embodiments of the disclosure, the radio frequency unit 601 receives downlink data from the network side device, and transmits them to the processor 610 for processing; and also transmits uplink data to the network side device. Generally, the radio frequency unit 601 includes, but is not limited to, an antenna, at least one amplifier, a transceiver, a coupler, a low noise amplifier, a duplexer, and the like.

The memory 609 may be used to store software programs or instructions as well as various data. The memory 609 may include a program or instruction storage area and a data storage area, in which the program or instruction storage area may store an operating system, an application program or instruction required by at least one function (such as a sound playback function, an image playback function, etc.), and the like. In addition, the memory 609 may include a highspeed random access memory, and may also include a non-transitory memory. The non-transitory memory may be a read-only memory (ROM), a programmable read-only memory (PROM), an erasable programmable read-only memory (Erasable PROM, EPROM), an electrically erasable programmable read-only memory (Electrically EPROM, EEPROM), or a flash memory. For example, the non-transitory memory could represent at least one disk storage device, flash memory device, or another type of non-transitory solid-state storage device.

The processor 610 may include one or more processing units. Optionally, the processor 610 may integrate an application processor and a modem processor. The application processor may process the operating system, user interface, application programs or instructions, etc. The modem processor may process wireless communications, such as a baseband processor. It may be understood that the foregoing modem processor may not be integrated into the processor 610.

The terminal according to the embodiments of the disclosure may realize each process implemented according to the method embodiments depicted in FIG. 2 and achieve the identical technical effect. To avoid redundancy, the details are not restated herein.

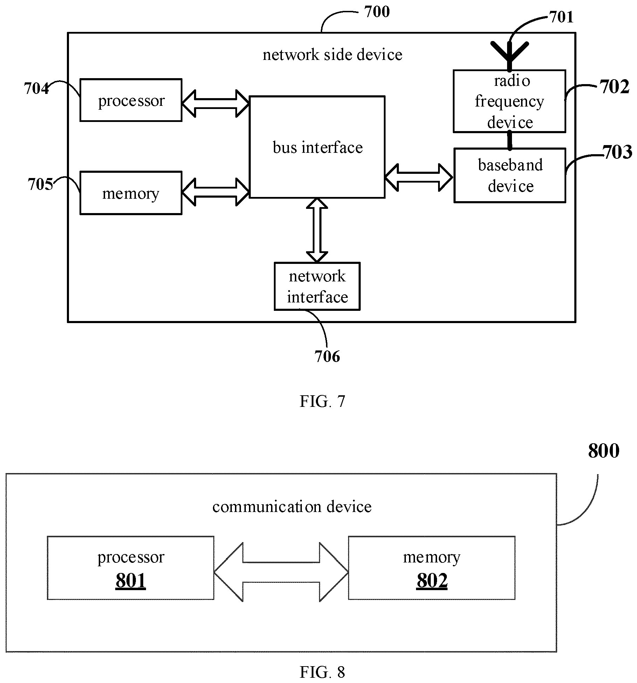

In detail, some embodiments of the disclosure also provide a network side device. As illustrated in FIG. 7, the network side device 700 includes: an antenna 701, a radio frequency device 702, and a baseband device 703. The antenna 701 is connected to the radio frequency device 702. In the uplink direction, the radio frequency device 702 receives information through the antenna 701, and transmits the received information to the baseband device 703 for processing. In the downlink direction, the baseband device 703 processes the information to be transmitted and transmits it to the radio frequency device 702, and the radio frequency device 702 processes the received information and transmits it out through the antenna 701.

The frequency band processing device may be located in the baseband device 703, and the methods performed by the network side device according to the above embodiments may be implemented in the baseband device 703. The baseband device 703 includes a processor 704 and a memory 705.

The baseband device 703, for example, may include at least one baseband board, upon which multiple chips are mounted, as illustrated in FIG. 7. Among these chips, one chip, for example, serves as a processor 704, interconnected with a memory 705. This processor 704 accesses programs stored in the memory 705 to execute the network device operations as illustrated according to the above method embodiments.

The baseband device 703 may further include a network interface 706 for exchanging information with the radio frequency device 702. The interface, for example, is a common public radio interface (CPRI).

In detail, the network side device according to embodiments of the disclosure further includes: instructions or programs stored in the memory 705 and executable on the processor 704.

It may be understood that the processor 704 invokes the instructions or programs stored in the memory 705 to execute the methods performed by the modules depicted in FIG. 5, achieving the same technical effects. To avoid the repetition, details will not be expounded herein.

As illustrated in FIG. 8, some embodiments of the disclosure also provide a communication device 800, including a processor 801, a memory 802, and a program or instruction stored in the memory 802 and operable on the processor 801. When the program or instruction is executed by the processor 801, each process of the above-mentioned method embodiments in FIG. 2 or FIG. 3 is realized, and the same technical effect may be achieved. To avoid the repetition, details are not repeated herein.

Some embodiments of the disclosure also provide a readable storage medium, on which a program or instruction is stored, and when the program or instruction is executed by the processor, each process of the above-mentioned method embodiments in FIG. 2 or FIG. 3 is realized, and the same technical effect may be achieved. To avoid the repetition, details are not repeated herein.

The processor is the processor in the terminal described in the foregoing embodiments. The readable storage medium includes a computer readable storage medium, such as a computer read-only memory (ROM), a random access memory (RAM), a magnetic disk, an optical disk, or the like.

The steps involved in the methods or algorithms outlined in relation to the disclosure may be embodied either as hardware or as software instructions executed on a processor. These software instructions would encompass corresponding software modules, which could be stored in the RAM, flash memory, ROM, EPROM, EEPROM, registers, hard disk, removable hard disk, compact disc-read only memory (CD-ROM), or any other recognized storage medium. A representative storage medium is connected to the processor, thereby allowing the processor to both read from and write to the medium. Indeed, the storage medium itself may also be an integral part of the processor. Both the processor and the storage medium may be integrated within an application-specific integrated circuit (ASIC). Furthermore, this ASIC could be incorporated within a core network interface device. Naturally, the processor and storage medium can also exist as separate components within the core network interface device.

Those skilled in the art will recognize that, in the foregoing one or more examples, the functions disclosed herein may be realized through the use of hardware, software, firmware, or any suitable combination thereof. When implemented in software, these functionalities may reside on a computer-readable medium or they may be conveyed as one or more instructions or code over a computer-readable medium. A computer-readable medium encompasses both computer storage medium and communication medium, with the latter including any medium suitable for transferring a computer program from one location to another. The storage medium may encompass any available medium that can be accessed by a general-purpose or specialized computer.

The specific embodiments described above provide a more detailed elucidation of obj ectives, technical solutions, and advantageous effects of the disclosure. It should be appreciated that the above-presented embodiments are merely illustrative and not restrictive of the full scope of protection of the disclosure. Any variations, equivalent substitutions, or enhancements derived from the technical solutions disclosed herein shall indeed fall within the scope of protection of the disclosure.

Those skilled in the art would readily appreciate that the embodiments of the disclosure may be manifested as methods, systems, or computer program products. Consequently, the embodiments of the disclosure may take the form of purely hardware, purely software, or a hybrid of both hardware and software constituents. Moreover, the embodiments may also assume the guise of a computer program product embodied in one or more computer-readable storage media-including, but not limited to, disk storage, CD-ROMs, optical storage media, and others—which contain executable computer program code.

The embodiments of the disclosure are described with reference to flowcharts and/or block diagrams depicting methods, devices (systems), and computer program products according to the embodiments of the disclosure. It should be understood that each step and/or block depicted in the flowchart and/or block diagram, as well as combinations of steps and/or blocks therein, can be realized through computer program instructions. Such computer program instructions can be furnished to a general-purpose computer, a dedicated special-purpose computer, an embedded processor, or any other programmable data processing apparatus, thereby creating a machine whereby the execution of instructions by the processor of the computer or other programmable data processing apparatus results in the creation of an apparatus that realizes the functions stipulated in one or more steps of the flowchart and/or one or more blocks of the block diagram.

These computer program instructions may also be stored in a computer-readable memory that directs a computer or other programmable data processing apparatus to operate in a specific manner, thus resulting in a manufactured article embodied in the computer-readable memory that includes an instruction device which implements the functions specified in one or more processes or blocks within a flowchart or block diagram.

These computer program instructions may also be loaded into a computer or any other programmable data processing apparatus, thereby instigating a sequence of operational steps to be executed on the computer or the programmable apparatus, ultimately yielding a computer-implemented process. This process essentially provides the steps necessary for executing the functions outlined in one or more processes or blocks depicted within the flowchart or block diagram.

Apparent to those skilled in the art, various alterations and modifications can be made to the embodiments of the disclosure without deviating from its spirit and scope. Hence, should the modifications and variations to the embodiments of the disclosure fall within the scope of the claims of the disclosure and their equivalent technologies, then the disclosure is indeed intended to embrace such modifications and variations.

## Claims

1. A handover method, comprising:
performing a handover by a terminal, a handover time of the terminal comprising one or more of:
a sum of a primary cell (PCell) handover time and a primary secondary cell (PSCell) addition time;
a maximum value of a PCell handover time and a PSCell addition time;
a PCell handover time and/or a PSCell addition time;
a sum of a PCell search time and a PSCell search time; or
a sum of a PCell search time, a PCell synchronization time, a PSCell search time, and a PSCell synchronization time.

2. The method according to claim 1, wherein,
in a case that a first condition is satisfied, the handover time of the terminal comprises one or more of:
the sum of the PCell handover time and the PSCell addition time;
the sum of the PCell search time and the PSCell search time; or
the sum of the PCell search time, the PCell synchronization time, the PSCell search time, and the PSCell synchronization time,
wherein the first condition comprises that: the terminal is configured with a synchronization signal block based (SSB-based) measurement timing configuration (SMTC) of a target unknown PSCell.

3. The method according to claim 1, further comprising:
obtaining first information by the terminal,
wherein the first information comprises one or more of:
first indication information for indicating the terminal to perform a PSCell addition after transmitting a physical random access channel (PRACH) preamble to a PCell;
second indication information for indicating the terminal to perform a PSCell addition after receiving a random access response (RAR) transmitted by a PCell;
third indication information for indicating the terminal to perform a PSCell addition after receiving message 4 (MSG4) transmitted by a PCell;
fourth indication information for indicating the terminal to perform a PSCell addition after transmitting message A (MSGA) to a PCell; or
fifth indication information for indicating the terminal to perform a PSCell addition after receiving message B (MSGB) transmitted by a PCell.

4. The method according to claim 1, further comprising:
obtaining second information by the terminal,
wherein the second information comprises one or more of:
sixth indication information for indicating that the handover time of the terminal comprises the sum of the PCell handover time and the PSCell addition time;
seventh indication information for indicating that the handover time of the terminal comprises the maximum value of the PCell handover time and the PSCell addition time;
eighth indication information for indicating that the handover time of the terminal comprises the PCell handover time and/or the PSCell addition time;
ninth indication information for indicating that the handover time of the terminal comprises the sum of the PCell search time and the PSCell search time; or
tenth indication information for indicating that the handover time of the terminal comprises the sum of the PCell search time, the PCell synchronization time, the PSCell search time, and the PSCell synchronization time.

5. The method according to claim 3, wherein a length of the handover time of the terminal is a first time length;
in a case that the first information comprises the first indication information, the first time length is: a sum of a time length starting from a moment the terminal receives a radio resource control (RRC) message implying the handover to a moment the terminal transmits the preamble to the PCell, and a time length for the terminal to perform the PSCell addition;
or,
in a case that the first information comprises the second indication information, the first time length is: a sum of a time length starting from a moment the terminal receives an RRC message implying the handover to a moment the terminal receives the RAR transmitted by the PCell, and a time length for the terminal to perform the PSCell addition;
or,
in a case that the first information comprises the third indication information, the first time length is: a sum of a time length starting from a moment the terminal receives an RRC message implying the handover to a moment the terminal receives the MSG4 transmitted by the PCell, and a time length for the terminal to perform the PSCell addition;
or,
in a case that the first information comprises the fourth indication information, the first time length is: a sum of a time length starting from a moment the terminal receives an RRC message implying the handover to a moment the terminal transmits the MSGA to the PCell, and a time length for the terminal to perform the PSCell addition;
or,
in a case that the first information comprises the fifth indication information, the first time length is: a sum of a time length starting from a moment the terminal receives an RRC message implying the handover to a moment the terminal receives the MSGB transmitted by the PCell, and a time length for the terminal to perform the PSCell addition.

6. The method according to claim 5, wherein the time length for the terminal to perform the PSCell addition comprises:
a time length starting from a moment the terminal receives the MSGB transmitted by the PCell to a moment the terminal transmits a preamble to a PSCell;
or,
a time length starting from a moment the terminal receives the MSGB transmitted by the PCell to a moment the terminal transmits MSGA to a PSCell;
or,
a time length starting from a moment the terminal receives the RAR transmitted by the PCell to a moment the terminal transmits a preamble to a PSCell;
or,
a time length starting from a moment the terminal receives the RAR transmitted by the PCell to a moment the terminal transmits MSGA to a PSCell;
or,
a time length starting from a moment the terminal receives the MSG4 transmitted by the PCell to a moment the terminal transmits a preamble to a PSCell;
or,
a time length starting from a moment the terminal receives the MSG4 transmitted by the PCell to a moment the terminal transmits MSGA to a PSCell;
or,
a time length starting from a moment the terminal receives the MSGA transmitted by the PCell to a moment the terminal transmits a preamble to a PSCell;
or,
a time length starting from a moment the terminal receives the MSGA transmitted by the PCell to a moment the terminal transmits MSGA to a PSCell.

7. The method according to claim 1, further comprising:
obtaining a first threshold by the terminal, wherein the first threshold is related to a channel quality;
in response to the channel quality being higher than and/or equal to a first value of the first threshold, determining to perform a PSCell addition after transmitting message 1 (MSG1) to a PCell;
or,
in response to the channel quality being higher than and/or equal to a second value of the first threshold, determining to perform a PSCell addition after receiving message 2 (MSG2) transmitted by a PCell;
or,
in response to the channel quality being higher than and/or equal to a third value of the first threshold, determining to perform a PSCell addition after receiving message 4 (MSG4) transmitted by a PCell;
or,
in response to the channel quality being lower than and/or equal to a first value of the first threshold, and the channel quality being higher than and/or equal to a second value of the first threshold, determining to perform a PSCell addition after receiving MSG2 transmitted by a PCell;
or,
in response to the channel quality being lower than and/or equal to a second value of the first threshold, and the channel quality being higher than and/or equal to a third value of the first threshold, determining to perform a PSCell addition after receiving MSG4 transmitted by a PCell;
or,
in response to the channel quality being higher than and/or equal to a fourth value of the first threshold, determining to perform a PSCell addition after transmitting message A (MSGA) to a PCell;
or,
in response to the channel quality being higher than and/or equal to a fifth value of the first threshold, determining to perform a PSCell addition after receiving message B (MSGB) transmitted by a PCell;
or,
in response to the channel quality being lower than and/or equal to a fourth value of the first threshold, and the channel quality being higher than and/or equal to a fifth value of the first threshold, determining to perform a PSCell addition after receiving MSGB transmitted by a PCell.

8. The method according to claim 1, further comprising:
obtaining a second threshold by the terminal, wherein the second threshold is related to a channel quality;
wherein in response to the channel quality being higher than and/or equal to a first value of the second threshold, the handover time of the terminal comprises the sum of the PCell handover time and the PSCell addition time;
in response to the channel quality being higher than and/or equal to a second value of the second threshold, the handover time of the terminal comprises the maximum value of the PCell handover time and the PSCell addition time;
in response to the channel quality being higher than and/or equal to a third value of the second threshold, the handover time of the terminal comprises the PCell handover time and/or the PSCell addition time;
in response to the channel quality being higher than and/or equal to a fourth value of the second threshold, the handover time of the terminal comprises the sum of the PCell search time and the PSCell search time; or
in response to the channel quality being higher than and/or equal to a fifth value of the second threshold, the handover time of the terminal comprises the sum of the PCell search time, the PCell synchronization time, the PSCell search time, and the PSCell synchronization time.

9. The method according to claim 1, further comprising:
transmitting third information by the terminal to a network side device;
wherein the third information comprises one or more of:
whether the terminal supports performing a PCell handover and a PSCell addition based on a parallel processing;
whether the terminal supports performing a PCell handover and a PSCell addition based on a serial processing;
whether the terminal supports that the handover time comprises the sum of the PCell handover time and the PSCell addition time;
whether the terminal supports that the handover time comprises the maximum value of the PCell handover time and the PSCell addition time;
whether the terminal supports that the handover time comprises the PCell handover time and/or the PSCell addition time;
whether the terminal supports that the handover time comprises the sum of the PCell search time and the PSCell search time;
whether the terminal supports that the handover time comprises the sum of the PCell search time, the PCell synchronization time, the PSCell search time, and the PSCell synchronization time;
eleventh indication information for indicating to perform a PSCell addition after a second operation;
twelfth indication information for indicating that the terminal supports a parallel processing of a third operation; or
thirteenth indication information for indicating that the terminal supports a serial processing of a fourth operation.

10. The method according to claim 9, wherein the second operation comprises one of:
transmitting message 1 (MSG1) to a PCell;
receiving message 2 (MSG2) transmitted by a PCell;
transmitting message 3 (MSG3) to a PCell;
receiving message 4 (MSG4) transmitted by a PCell;
transmitting message A (MSGA) to a PSCell; or
receiving message B (MSGB) transmitted by a PCell.

11. The method according to claim 1, further comprising:
receiving fourth information by the terminal from a network side device;
wherein the fourth information comprises one or more of:
fourteenth indication information for indicating whether the terminal performs a handover with a PSCell addition through a parallel processing;
fifteenth indication information for indicating whether the terminal performs a handover with a PSCell addition through a serial processing;
sixteenth instruction information for indicating that a fifth operation is to be processed in parallel; or
seventeenth instruction information for indicating that a sixth operation is to be processed in serial.

12. The method according to claim 9 or 11, wherein the third operation or the fourth operation or the fifth operation or the sixth operation comprises one or more of:
a cell detection;
a time domain synchronization;
a frequency domain synchronization;
an automatic gain control; or
a random access.

13. A handover method, comprising:
transmitting first information by a network side device;
wherein the first information comprises one or more of:
first indication information for indicating a terminal to perform a PSCell addition after transmitting a physical random access channel (PRACH) preamble to a PCell;
second indication information for indicating a terminal to perform a PSCell addition after receiving a random access response (RAR) transmitted by a PCell;
third indication information for indicating a terminal to perform a PSCell addition after receiving message 4 (MSG4) transmitted by a PCell;
fourth indication information for indicating a terminal to perform a PSCell addition after transmitting message A (MSGA) to a PCell; or
fifth indication information for indicating a terminal to perform a PSCell addition after receiving message B (MSGB) transmitted by a PCell.

14. The method according to claim 13, further comprising:
transmitting second information by the network side device;
wherein the second information comprises one or more of:
sixth indication information for indicating that a handover time of the terminal comprises a sum of a PCell handover time and a PSCell addition time;
seventh indication information for indicating that a handover time of the terminal comprises a maximum value of a PCell handover time and a PSCell addition time;
eighth indication information for indicating that a handover time of the terminal comprises a PCell handover time and/or a PSCell addition time;
ninth indication information for indicating that a handover time of the terminal comprises a sum of a PCell search time and a PSCell search time; or
tenth indication information for indicating that a handover time of the terminal comprises a sum of a PCell search time, a PCell synchronization time, a PSCell search time, and a PSCell synchronization time.

15. The method according to claim 13, wherein a length of the handover time of the terminal is a first time length;
in a case that the first information comprises the first indication information, the first time length is: a sum of a time length starting from a moment the terminal receives a radio resource control (RRC) message implying the handover to a moment the terminal transmits the preamble to the PCell, and a time length for the terminal to perform the PSCell addition;
or,
in a case that the first information comprises the second indication information, the first time length is: a sum of a time length starting from a moment the terminal receives an RRC message implying the handover to a moment the terminal receives the RAR transmitted by the PCell, and a time length for the terminal to perform the PSCell addition;
or,
in a case that the first information comprises the third indication information, the first time length is: a sum of a time length starting from a moment the terminal receives an RRC message implying the handover to a moment the terminal receives the MSG4 transmitted by the PCell, and a time length for the terminal to perform the PSCell addition;
or,
in a case that the first information comprises the fourth indication information, the first time length is: a sum of a time length starting from a moment the terminal receives an RRC message implying the handover to a moment the terminal transmits the MSGA to the PCell and a time length for the terminal to perform the PSCell addition;
or,
in a case that the first information comprises the fifth indication information, the first time length is: a sum of a time length starting from a moment the terminal receives an RRC message implying the handover to a moment the terminal receives the MSGB transmitted by the PCell, and a time length for the terminal to perform the PSCell addition.

16. The method according to claim 15, wherein the time length for the terminal to perform the PSCell addition comprises:
a time length starting from a moment the terminal receives the MSGB transmitted by the PCell to a moment the terminal transmits a preamble to a PSCell;
or,
a time length starting from a moment the terminal receives the MSGB transmitted by the PCell to a moment the terminal transmits MSGA to a PSCell;
or,
a time length starting from a moment the terminal receives the RAR transmitted by the PCell to a moment the terminal transmits a preamble to a PSCell;
or,
a time length starting from a moment the terminal receives the RAR transmitted by the PCell to a moment the terminal transmits MSGA to a PSCell;
or,
a time length starting from a moment the terminal receives the MSG4 transmitted by the PCell to a moment the terminal transmits a preamble to a PSCell;
or,
a time length starting from a moment the terminal receives the MSG4 transmitted by the PCell to a moment the terminal transmits MSGA to a PSCell;
or,
a time length starting from a moment the terminal receives the MSGA transmitted by the PCell to a moment the terminal transmits a preamble to a PSCell;
or,
a time length starting from a moment the terminal receives the MSGA transmitted by the PCell to a moment the terminal transmits MSGA to a PSCell.

17. The method according to claim 13, further comprising:
transmitting a second threshold by the network side device, wherein the second threshold is related to a channel quality;
wherein in response to the channel quality being higher than and/or equal to a first value of the second threshold, a handover time of the terminal comprises a sum of a PCell handover time and a PSCell addition time;
in response to the channel quality being higher than and/or equal to a second value of the second threshold, a handover time of the terminal comprises a maximum value of a PCell handover time and a PSCell addition time;
in response to the channel quality being higher than and/or equal to a third value of the second threshold, a handover time of the terminal comprises a PCell handover time and/or a PSCell addition time;
in response to the channel quality being higher than and/or equal to a fourth value of the second threshold, a handover time of the terminal comprises a sum of a PCell search time and a PSCell search time;
in response to the channel quality being higher than and/or equal to a fifth value of the second threshold, a handover time of the terminal comprises a sum of a PCell search time, a PCell synchronization time, a PSCell search time, and a PSCell synchronization time.

18. The method according to claim 13, further comprising:
receiving third information by the network side device;
wherein the third information comprises one or more of:
whether the terminal supports performing a PCell handover and a PSCell addition based on a parallel processing;
whether the terminal supports performing a PCell handover and a PSCell addition based on a serial processing;
whether the terminal supports that a handover time comprises a sum of a PCell handover time and a PSCell addition time;
whether the terminal supports that a handover time comprises a maximum value of a PCell handover time and a PSCell addition time;
whether the terminal supports that a handover time comprises a PCell handover time and/or a PSCell addition time;
whether the terminal supports that a handover time comprises a sum of a PCell search time and a PSCell search time;
whether the terminal supports that a handover time comprises a sum of a PCell search time, a PCell synchronization time, a PSCell search time, and a PSCell synchronization time;
eleventh indication information for indicating to perform a PSCell addition after a second operation;
twelfth indication information for indicating that the terminal supports a parallel processing of a third operation; or
thirteenth indication information for indicating that the terminal supports a serial processing of a fourth operation.

19. The method according to claim 18, wherein the second operation comprises one of:
transmitting message 1 (MSG1) to a PCell;
receiving message 2 (MSG2) transmitted by a PCell;
transmitting message 3 (MSG3) to a PCell;
receiving message 4 (MSG4) transmitted by a PCell;
transmitting message A (MSGA) to a PSCell; or
receiving message B (MSGB) transmitted by a PCell.

20. The method according to claim 15, further comprising:
transmitting fourth information by the network side device;
wherein the fourth information comprises one or more of:
fourteenth indication information for indicating whether the terminal performs a handover with a PSCell addition through a parallel processing;
fifteenth indication information for indicating whether the terminal performs a handover with a PSCell addition through a serial processing;
sixteenth instruction information for indicating that a fifth operation is to be processed in parallel; or
seventeenth instruction information for indicating that a sixth operation is to be processed in serial.

21. A handover apparatus applied to a terminal, comprising:
a handover module, configured to perform a handover, a handover time of the terminal comprising one or more of:
a sum of a PCell handover time and a PSCell addition time;
a maximum value of a PCell handover time and a PSCell addition time;
a PCell handover time and/or a PSCell addition time;
a sum of a PCell search time and a PSCell search time; or
a sum of a PCell search time, a PCell synchronization time, a PSCell search time, and a PSCell synchronization time.

22. A handover apparatus applied to a network side device, comprising:
a second transmitting module, configured to transmit first information;
wherein the first information comprises one or more of:
first indication information for indicating a terminal to perform a PSCell addition after transmitting a physical random access channel (PRACH) preamble to a PCell;
second indication information for indicating a terminal to perform a PSCell addition after receiving a random access response (RAR) transmitted by a PCell;
third indication information for indicating a terminal to perform a PSCell addition after receiving message 4 (MSG4) transmitted by a PCell;
fourth indication information for indicating a terminal to perform a PSCell addition after transmitting message A (MSGA) to a PCell; or
fifth indication information for indicating a terminal to perform a PSCell addition after receiving message B (MSGB) transmitted by a PCell.

23. A communication device, comprising: a processor, a memory, and a program stored on the memory and operable on the processor, when the program is executed by the processor, steps of the method according to any one of claims 1-20 are realized.

24. A readable storage medium, wherein the readable storage medium stores a program, and when the program is executed by a processor, steps of the method according to any one of claims 1-20 are realized.
